# EUROPEAN PATENT APPLICATION

(11) **EP 4 740 827 A1**
(43) Date of publication of application: **13.05.2026**
(21) Application number: 24849509.5
(22) Date of filing: 26.07.2024
(51) Int. Cl.: A47L 15/42, F21V 33/00, F21K 9/237, F21V 31/00, F21V 19/00, F21S 10/00, F21Y 115/10, F21W 131/30

(54) **DISHWASHER**

(30) Priority: 28.07.2023 KR 20230098807; 16.02.2024 KR 20240022971
(71) Applicant: LG Electronics Inc., Yeongdeungpo-gu Seoul 07336 (KR)
(72) Inventor: CHOI, Dong Jun, Seoul 06772 (KR); JO, Yeon A, Seoul 06772 (KR); KIM, Yongnam, Seoul 06772 (KR); CHO, Sangwoog, Seoul 06772 (KR); PARK, Sung Hyun, Seoul 06772 (KR); KANG, Jin Won, Seoul 06772 (KR)
(74) Representative: Schornack, Oliver
(86) International application number: PCT/KR2024/010925
(87) International publication number: WO 2025/028940

(57) **Abstract**

The present invention relates to a dishwasher capable of effectively preventing a deterioration in rigidity of a tub by minimizing the number of opening portions, through which visible rays generated by a light source part pass, and minimizing an open area of each of the opening portions, the dishwasher being configured such that components of a lighting device, which are disposed inside a tub, are attached to an inner surface of the tub, components of the lighting device, which are disposed outside the tub, are attached to an outer surface of the tub, and the internal component and the external component are disposed so as not to be fastened to each other so that an additional fastening means, which penetrates the tub, may be excluded, such that a fastening hole, through which the fastening means passes, may be excluded, which may remarkably reduce the manufacturing costs and manufacturing time.

## Description

### [Technical Field]

The present invention relates to a dishwasher, and more particularly, to a dishwasher capable of effectively preventing a deterioration in rigidity of a tub by minimizing the number of opening portions, through which visible rays generated by a light source part pass, and minimizing an open area of each of the opening portions, the dishwasher being configured such that components of a lighting device, which are disposed inside a tub, are attached to an inner surface of the tub, components of the lighting device, which are disposed outside the tub, are attached to an outer surface of the tub, and the internal component and the external component are disposed so as not to be fastened to each other so that an additional fastening means, which penetrates the tub, may be excluded, such that a fastening hole, through which the fastening means passes, may be excluded, which may remarkably reduce the manufacturing costs and manufacturing time.

### [Background Art]

A dishwasher refers to a device that washes washing targets, such as dishes and cookware, contained in the dishwasher by spraying washing water, such as water, to the washing targets. In this case, the washing water used for a washing process may include a detergent.

In general, the dishwasher includes a tub configured to define a washing space, an accommodation part disposed in the washing tub and configured to accommodate the washing targets, a spray arm configured to spray the washing water to the accommodation part, and a sump configured to store water and supply the washing water to the spray arm.

The use of the dishwasher may contribute to user convenience by reducing the time and effort required to wash washing targets, such as dishes, after a meal.

Typically, the dishwasher may be configured to perform a washing operation of washing the washing target, a rinsing operation of rinsing the washing target, and a drying operation of drying the washing target completely washed and rinsed.

A user needs to perform a process of opening and closing a door to accommodate dishes in the dishwasher before performing the above-mentioned operations and to take dishes, which are completely washed and dried, from the dishwasher after completing the above-mentioned operations.

In the tub, at least one lighting device may be provided as a means used to effectively identify an accommodated state of the dishes and a washed state of the dishes in a situation in which an accommodation part, on which the dishes are mounted, is not withdrawn to the outside of the tub when the door is opened or closed.

In consideration of a shape of the tub having a box shape having an opened front side, the lighting device may be disposed on any one of a rear surface and two opposite surfaces of the tub, which constitute an inner surface of the tub, and configured to emit visible rays toward the dishes.

However, the lighting device, which is applied to the dishwasher, may emit point light beams with significantly small light-emitting areas.

Therefore, in general, it is difficult to effectively illuminate the dishes, which are accommodated in the tub, only by using a single lighting device.

In this regard, U.S. Patent No. 10,281,134 (Patent Document 001) discloses a configuration of a dishwasher equipped with a surface lighting type lighting device having a light-emitting surface with a relatively and significantly larger light-emitting area than a point lighting type lighting device.

The lighting device of the dishwasher disclosed in Patent Document 001 may be provided as a plurality of lighting devices disposed to be fixed to a rear surface of a tub.

In this case, a light source part, which constitutes the lighting device and includes electrical components, is configured to be fixed to an outer surface of the rear surface of the tub so that the light source part is not affected by a high-temperature, humid environment formed in the tub.

A plurality of passing holes is formed in the rear surface of the tub and each has an open area corresponding to an area of the light-emitting surface while corresponding to each of the lighting devices so that visible rays generated by the light source part may be introduced into the tub.

### [Disclosure]

### [Technical Problem]

The lighting device in Patent Document 001 is configured such that some components are disposed outside the tub, and some of the remaining components are disposed inside the tub.

A plurality of fasteners extends while penetrating the tub as a means for fastening the components of the lighting device, which are disposed inside the tub, and the components of the lighting device, which are disposed outside the tub, to the tub.

Therefore, in the dishwasher in Patent Document 001, the passing hole, which has a significantly large open area corresponding to the area of the light-emitting surface, needs to be formed, and fastening holes, through which the fasteners pass, need to be formed around the passing hole, which causes a problem in that the rigidity of the rear surface of the tub, in which the passing hole and the fastening holes are formed, is inevitably degraded significantly.

In addition, the dishwasher in Patent Document 001 has a problem in which the manufacturing costs and manufacturing time may increase because the fastening holes are additionally processed in addition to the passing hole.

In addition, in the dishwasher in Patent Document 001, a sealing means needs to be additionally provided in the fastening hole to prevent a leak of washing water through the fastening hole, which causes a problem in that the manufacturing costs may be increased, and the manufacturing process may be complicated.

The present invention has been made in an effort to solve the above-mentioned problems in the related art, and a first object of the present invention is to provide a dishwasher capable of effectively preventing a deterioration in rigidity of a tub by minimizing the number of opening portions, through which visible rays generated by a light source part pass, and minimizing an open area of each of the opening portions.

In addition, a second object of the present invention is to provide a dishwasher configured such that components of a lighting device, which are disposed inside a tub, are attached to an inner surface of the tub, components of the lighting device, which are disposed outside the tub, are attached to an outer surface of the tub, and the internal component and the external component are disposed so as not to be fastened to each other so that an additional fastening means, which penetrates the tub, may be excluded, such that a fastening hole, through which the fastening means passes, may be excluded, which may remarkably reduce the manufacturing costs and manufacturing time.

In addition, a third object of the present invention is to provide a dishwasher configured such that a front cover is attached to a tub by means of a sealing member, which is disposed to prevent a leak of water between an inner surface of the tub and the front cover disposed in the tub, which may minimize the number of fastening means or the number of fixing means and remarkably reduce the manufacturing process and manufacturing time.

In addition, a fourth object of the present invention is to provide a dishwasher configured such that a lighting device is disposed in a tub as a whole or only a diffusion plate, which defines a light-emitting surface, is disposed in the tub, which may minimize a size of an opening portion, effectively prevent a deterioration in rigidity of the tub, and remarkably reduce a likelihood of the occurrence of a leak of water.

The objects of the present invention are not limited to the above-mentioned objects, and other objects and advantages of the present invention, which are not mentioned above, may be understood from the following descriptions and more clearly understood from the embodiment of the present invention. In addition, it can be easily understood that the objects and advantages of the present invention may be realized by means defined in the claims and a combination thereof.

### [Technical Solution]

A dishwasher according to the present invention may include: a tub configured to define a washing space configured to accommodate dishes and having an opened front side; and a lighting device installed on an inner surface of the tub and having a light-emitting surface configured to emit visible rays toward the washing space, in which an opening portion is provided in an inner surface of the tub and configured to allow the inside and outside of the tub to communicate with each other, and in which the lighting device is disposed in the tub over the inside and outside of the tub while passing through the opening portion.

In addition, the lighting device may include: a light source part configured to generate the visible rays; a light guide plate configured to switch a movement path of the visible rays generated by the light source part; a diffusion plate configured to define the light-emitting surface and diffuse the visible rays, which are introduced while passing through the light guide plate, toward the light-emitting surface; and a front cover coupled to an outer periphery edge of the light guide plate and fixed to the tub, the front cover may be attached to the inner surface of the tub, and the opening portion may be closed by the front cover and the diffusion plate.

In addition, the lighting device may further include: a first sealing member configured to attach the front cover to the inner surface of the tub and prevent the occurrence of a leak of water between the front cover and the tub; and a second sealing member configured to attach the diffusion plate to the front cover and prevent the occurrence of a leak of water between the front cover and the diffusion plate.

In addition, a protruding surface may be disposed around the opening portion of the tub and formed convexly toward the washing space, a first groove portion may be provided in one side surface of the front cover disposed to face the inner surface of the tub, the first groove portion may be formed at a position corresponding to the protruding surface and formed concavely toward the washing space so that the protruding surface is inserted into the first groove portion, and the first sealing member may be disposed between the protruding surface and the first groove portion.

In addition, a plurality of through-holes, through which the first sealing member passes, may be provided in the protruding surface, and the plurality of through-holes may be disposed at equal intervals along the protruding surface.

In addition, the lighting device may further include a mid-casing disposed outside the tub and configured to accommodate and support the light source part and the light guide plate, the tub may include a rear bracket provided on an outer surface of the inner surface, disposed around the opening portion, and configured to fix the mid-casing to the tub, and the mid-casing may be detachably fixed to the tub in a non-adhesive manner by the rear bracket.

In addition, the rear bracket may include: a bracket main body extending along a periphery of the opening portion and fixed to the outer surface of the inner surface; and a plurality of fixing portions each having one end that is a fixed end integrally connected to the bracket main body, and the other end that is a free end extending toward the opening portion, the plurality of fixing portions being configured to elastically support an outer periphery edge of the mid-casing.

In addition, the plurality of fixing portions may include a pair of first fixing portions disposed at positions spaced apart from each other in an upward/downward direction with the mid-casing interposed therebetween, an interval in the upward/downward direction between the pair of first fixing portions may vary toward the bracket main body, a minimum interval in the upward/downward direction between the pair of first fixing portions may be smaller than a width in the upward/downward direction of the mid-casing, and a maximum interval in the upward/downward direction between the pair of first fixing portions may be larger than the width in the upward/downward direction of the mid-casing.

In addition, the plurality of fixing portions may include a pair of second fixing portions disposed at positions spaced apart from each other in a leftward/rightward direction with the mid-casing interposed therebetween, an interval in the leftward/rightward direction between the pair of second fixing portions may vary toward the bracket main body, a minimum interval in the leftward/rightward direction between the pair of second fixing portions may be smaller than a width in the leftward/rightward direction of the mid-casing, and a maximum interval in the leftward/rightward direction between the pair of second fixing portions may be larger than the width in the leftward/rightward direction of the mid-casing.

In addition, the mid-casing may be fixed to an outer portion of the tub after the front cover is fixed to an inner portion of the tub in a state in which the light guide plate is attached to the front cover, and the front cover and the mid-casing may be fixed to the tub in a non-fastened state.

In addition, the light source part may extend in a leftward/rightward direction in parallel with an upper or lower end of the light-emitting surface.

In addition, the light source part may extend in an upward/downward direction in parallel with a left or right end of the light-emitting surface.

In addition, the lighting device may be fixed to a rear surface of the inner surface of the tub disposed to face the opened front side.

In addition, the dishwasher may further include: a plurality of guide rails disposed on two opposite side walls of the inner surface of the tub and configured to guide a movement of an accommodation part configured to accommodate the dishes, in which a lower end of the light-emitting surface is positioned between a lower rail, which is disposed at a lowermost side among the plurality of guide rails, and an upper rail disposed at a position higher than the lower rail based on an upward/downward direction.

In addition, an upper end of the light-emitting surface may be positioned between an upper rail and a top rail disposed at an uppermost side among the plurality of guide rails based on an upward/downward direction.

In addition, the lighting device may include: a light source part configured to generate the visible rays; a diffusion plate configured to define the light-emitting surface and diffuse the visible rays, which are generated by the light source part, toward the light-emitting surface; and a cover disposed above the diffusion plate and configured to accommodate the light source part and an upper end of the diffusion plate therein, an extension tube may be provided on one side surface of the cover, protrude toward the inner surface of the tub, and extend to the outside of the tub while passing through the opening portion, and the cover may be disposed in the tub as a whole, except for the extension tube.

In addition, one end of the light source part may pass through the cover and extend to the outside of the tub along the inside of the extension tube.

In addition, the lighting device may further include a gasket disposed between the opening portion and the extension tube to prevent the occurrence of a leak of water between the opening portion and the extension tube.

In addition, the lighting device may include: a light source part configured to generate the visible rays; a diffusion plate configured to define the light-emitting surface and diffuse the visible rays, which are generated by the light source part, toward the washing space; and a cover disposed above the diffusion plate and configured to accommodate the light source part and an upper end of the diffusion plate therein, the light source part and the cover may be disposed outside the tub, and the diffusion plate may pass through the opening portion and extend toward the inside of the tub from the outside of the tub.

In addition, the opening portion may be formed in an edge surface having a predetermined curvature and configured to connect an upper surface of the tub and a rear surface of the tub.

### [Advantageous Effects]

The dishwasher according to the present invention may effectively prevent a deterioration in rigidity of the tub by minimizing the number of opening portions, through which visible rays generated by the light source part pass, and minimizing the open area of each of the opening portions.

In addition, the dishwasher according to the present invention may be configured such that the internal component and the external component are disposed so as not to be fastened to each other so that an additional fastening means, which penetrates the tub, may be excluded, such that a fastening hole, through which the fastening means passes, may be excluded, which may remarkably reduce the manufacturing costs and manufacturing time.

In addition, the dishwasher according to the present invention may be configured such that the front cover is attached to the tub by means of the sealing member, which is disposed to prevent a leak of water between the inner surface of the tub and the front cover disposed in the tub, which may minimize the number of fastening means or the number of fixing means and remarkably reduce the manufacturing process and manufacturing time.

In addition, the dishwasher according to the present invention may be configured such that the lighting device is disposed in the tub as a whole or only the diffusion plate, which defines the light-emitting surface, is disposed in the tub, which may minimize the size of the opening portion, effectively prevent a deterioration in rigidity of the tub, and remarkably reduce a likelihood of the occurrence of a leak of water.

The specific effects of the present invention, together with the above-mentioned effects, will be described along with the description of specific items for carrying out the present invention.

### [Description of Drawings]

FIG. 1 is a front perspective view of a dishwasher according to an embodiment of the present invention.
FIG. 2 is a schematic cross-sectional view of the dishwasher illustrated in FIG. 1.
FIG. 3 is a front perspective view illustrating a state in which a door of the dishwasher illustrated in FIG. 1 is opened.
FIGS. 4 and 5 are a front perspective view and a front view illustrating a state in which a lighting device according to a first embodiment of the present invention is disposed on a rear surface of a tub.
FIG. 6 is an exploded perspective view of the lighting device according to the first embodiment of the present invention.
FIG. 7 is a vertical cross-sectional view illustrating a state in which the lighting device illustrated in FIG. 6 is installed on the tub.
FIG. 8 is a cross-sectional view illustrating a state in which a diffusion plate and a front cover are attached to the rear surface of the tub among the components of the lighting device illustrated in FIG. 6.
FIG. 9 is a partially enlarged view illustrating a state in which a protruding surface, which serves to guide an attachment position of the diffusion plate illustrated in FIG. 8 and improve a coupling strength to the diffusion plate, is formed around an opening portion of the tub.
FIG. 10 is a front perspective view illustrating a process of attaching the diffusion plate and the front cover to the rear surface of the tub.
FIG. 11 is a front perspective view illustrating a state in which the diffusion plate and the front cover are attached to the rear surface of the tub.
FIG. 12 is a vertical cross-sectional view illustrating a process in which a mid-casing, a light source part, a light guide plate, and a rear cover, which are disposed outside the tub, are coupled to the rear surface of the tub among the components of the lighting device illustrated in FIG. 6.
FIG. 13 is a vertical cross-sectional view illustrating a state in which the mid-casing, the light source part, the light guide plate, and the rear cover are coupled to the rear surface of the tub.
FIG. 14 is a rear perspective view illustrating a process of attaching a rear bracket illustrated in FIG. 13 to the rear surface of the tub.
FIG. 15 is a rear view illustrating a state in which the rear bracket illustrated in FIG. 13 is attached to the rear surface of the tub.
FIGS. 16 and 17 are front views for explaining a position at which the light source part illustrated in FIG. 6 is arranged.
FIG. 18 is a front perspective view illustrating a state in which a lighting device according to a second embodiment of the present invention is attached to the rear surface of the tub.
FIG. 19 is a vertical cross-sectional view of FIG. 18.
FIG. 20 is an exploded perspective view of the lighting device illustrated in FIG. 18.
FIG. 21 is a cross-sectional view illustrating a state in which the lighting device illustrated in FIG. 18 is attached to the rear surface of the tub, and an extension tube passes through an opening portion of the tub and protrudes to the outside of the tub.
FIG. 22 is a front perspective view illustrating a state in which a lighting device according to a third embodiment of the present invention passes through the opening portion of the tub and is attached to the rear surface of the tub.
FIG. 23 is a vertical cross-sectional view of FIG. 22.
FIG. 24 is a front perspective view illustrating a state in which the front cover and the rear cover among the components of the lighting device illustrated in FIG. 22.

### [Mode for Invention]

The above-mentioned objects, features, and advantages will be described in detail below with reference to the accompanying drawings, and thus the technical spirit of the present invention will be easily carried out by those skilled in the art to which the present invention pertains. In the description of the present invention, the specific descriptions of publicly known technologies related with the present invention will be omitted when it is determined that the specific descriptions may unnecessarily obscure the subject matter of the present invention. Hereinafter, exemplary embodiments of the present invention will be described in detail with reference to the accompanying drawings. In the drawings, the same reference numerals are used to indicate the same or similar constituent elements.

Terms "first", "second", and the like may be used to describe various constituent elements, but the constituent elements are of course not limited by these terms. These terms are merely used to distinguish one constituent element from another constituent element. Therefore, unless explicitly described to the contrary, the first constituent element may, of course, be the second constituent element.

Throughout the specification, unless explicitly described to the contrary, the respective constituent elements may each be singular or plural.

Hereinafter, a configuration in which any component is disposed "above (below)" a constituent element or disposed on "an upper portion (or a lower portion)" of a constituent element may not only mean that any component is disposed to adjoin an upper surface (or a lower surface) of the constituent element, but also mean that another component may be interposed between the constituent element and any component disposed above (or below) the constituent element.

In addition, when one constituent element is described as being "connected," "coupled," or "attached" to another constituent element, it should be understood that the constituent elements may be connected or attached directly to each other, and an intervening constituent element may be "interposed" between the constituent elements, or the constituent elements may be "connected," "coupled," or "attached" to each other by an intervening constituent element.

Singular expressions used in the present specification include plural expressions unless clearly described as different meanings in the context. It should not be interpreted that the terms "comprises," "comprising," "includes" and/or "including," used herein necessarily include all of the several constituent elements or several steps disclosed in the present specification, and it should be interpreted that the terms do not include some of the constituent elements or steps and may further include additional constituent elements or steps.

In addition, singular expressions used in the present specification include plural expressions unless clearly described as different meanings in the context. It should not be interpreted that the terms "comprises," "comprising," "includes" and/or "including," used herein necessarily include all of the several constituent elements or several steps disclosed in the present specification, and it should be interpreted that the terms do not include some of the constituent elements or steps and may further include additional constituent elements or steps.

Throughout the specification, "A and/or B" means A, B, or A and B unless explicitly described to the contrary, and "C to D" means C or more and D or less unless explicitly described to the contrary.

Hereinafter, the present invention will be described with reference to the drawings illustrating configurations according to the embodiment of the present invention.

### [Overall Structure of Dishwasher]

Hereinafter, an overall structure of a dishwasher 1 according to an embodiment of the present invention will be described in detail with reference to the accompanying drawings.

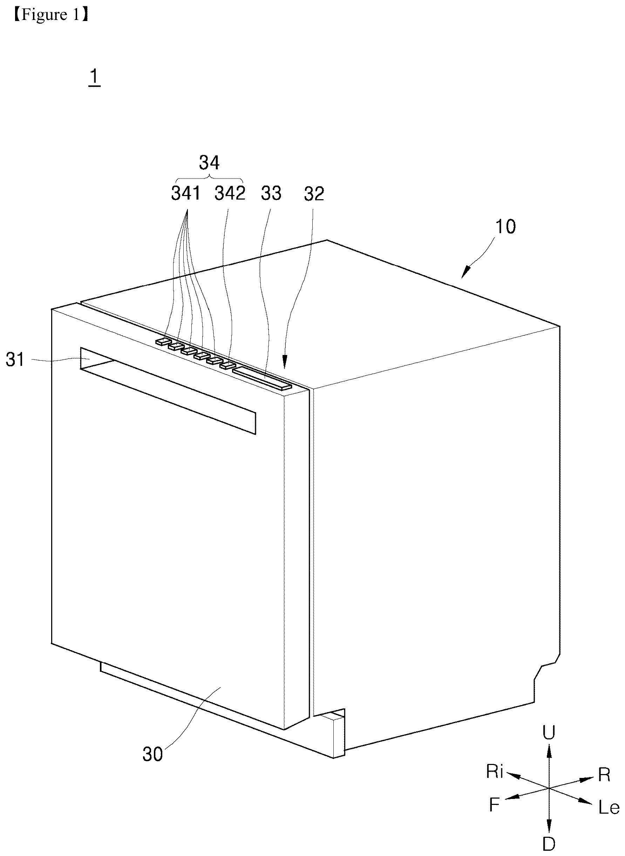

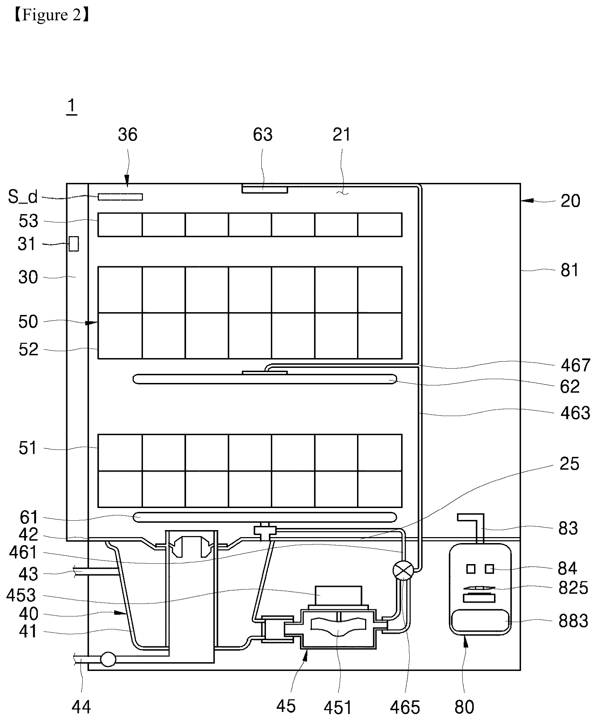

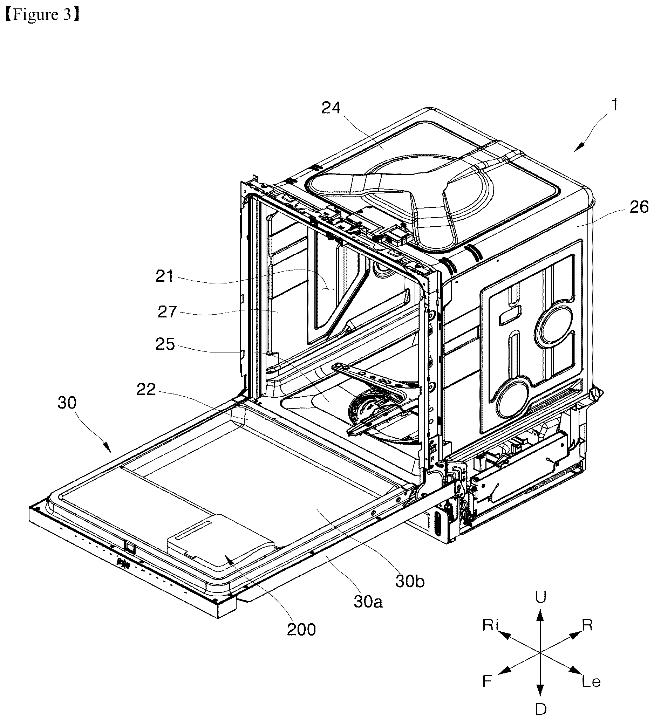

FIG. 1 is a front perspective view illustrating the dishwasher 1 according to the present invention, FIG. 2 is a schematic cross-sectional view briefly illustrating an internal structure of the dishwasher 1 according to the present invention, and FIG. 3 is a front perspective view illustrating the dishwasher 1 in which a door 30 is opened.

As illustrated in FIGS. 1 to 3, the dishwasher 1 according to the present invention includes a casing 10 configured to define an external shape, a tub 20 installed in the casing 10, configured to define a washing space 21 in which a washing target is washed, and having an opened front side, the door 30 configured to open or close the opened front side of the tub 20, a drive part 40 positioned below the tub 20 and configured to supply, collect, circulate, and drain washing water used to wash the washing target, an accommodation part 50 detachably provided in the washing space 21 in the tub 20 and configured such that the washing target is seated in the accommodation part 50, and a spray part disposed adjacent to the accommodation part 50 and configured to spray the washing water used to wash the washing target.

In this case, for example, the washing targets seated in the accommodation part 50 may be dishes, such as bowls, plates, spoons, and chopsticks, and other cookware. Hereinafter, the washing target will be referred to as the dish unless otherwise stated.

The tub 20 may be formed in a box shape having a front side entirely opened and correspond to a component known as a so-called washing tub.

The washing space 21 may be formed in the tub 20, and the opened front side may be opened or closed by the door 30.

The tub 20 may be formed by pressing a metal plate highly resistant to a high temperature and moisture, for example, a board made of a material such as a stainless steel.

In addition, a plurality of brackets may be disposed on an inner surface of the tub 20, and the plurality of brackets serves to support and install functional components, such as the accommodation part 50 and the spray part to be described below, in the tub 20.

Meanwhile, the drive part 40 may include a sump 41 configured to store the washing water, a sump cover 42 configured to separate the sump 41 from the tub 20, a water supply part 43 configured to supply the washing water to the sump 41 from the outside, a water discharge part 44 configured to discharge the washing water in the sump 41 to the outside, and a washing pump 45 and a supply channel 46 configured to supply the washing water in the sump 41 to the spray part. The sump cover 42 may be disposed above the sump 41 and serve to separate the tub 20 and the sump 41.

In addition, the sump cover 42 may have a plurality of recovery holes for recovering the washing water, which is sprayed to the washing space 21 by the spray part, into the sump 41.

That is, the washing water, which is sprayed toward the dishes by the spray part, may fall downward to a lower side of the washing space 21 and be recovered into the sump 41 through the sump cover 42.

The washing pump 45 is provided at one side of the sump 41 and serves to pressurize the washing water and supply the washing water to the spray part.

One end of the washing pump 45 may be connected to the sump 41, and the other end of the washing pump 45 may be connected to the supply channel 46. The washing pump 45 may include an impeller 451, a motor 453, and the like. When electric power is supplied to the motor 453, the impeller 451 may rotate, and the washing water in the sump 41 may be pressurized and then supplied to the spray part via the supply channel 46.

Although not illustrated, a washing water heater may be provided in the washing pump 45 and serve to heat the supplied washing water during a washing operation or a drying/rinsing operation.

Meanwhile, the supply channel 46 may serve to selectively supply the spray part with the washing water supplied from the washing pump 45.

For example, the supply channel 46 may include a first supply channel 461 connected to a lower spray arm 61, and a second supply channel 463 connected to an upper spray arm 62 and a top nozzle 63. A supply channel switching valve 465 may be provided in the supply channel 46 and selectively open or close the supply channels 461 and 463.

In this case, the supply channel switching valve 465 may be controlled to sequentially or simultaneously open the supply channels 461 and 463.

Meanwhile, the spray part is configured to supply the washing water to the dishes and the like accommodated in the accommodation part 50.

More specifically, the spray part may include the lower spray arm 61 positioned at a lower side of the tub 20 and configured to spray the washing water to a lower rack 51, the upper spray arm 62 positioned between the lower rack 51 and an upper rack 52 and configured to spray the washing water to the lower rack 51 and the upper rack 52, and the top nozzle 63 positioned at an upper side of the tub 20 and configured to spray the washing water to a top rack 53 or the upper rack 52.

In particular, the lower spray arm 61 and the upper spray arm 62 may be rotatably provided in the washing space 21 of the tub 20 and spray the washing water while rotating toward the dishes in the accommodation part 50.

The lower spray arm 61 may be rotatably supported above the sump cover 42 to spray the washing water toward the lower rack 51 while rotating at a position below the lower rack 51.

In addition, the upper spray arm 62 may be rotatably supported by a spray arm holder 467 to spray the washing water while rotating at a position between the lower rack 51 and the upper rack 52.

Meanwhile, although not illustrated, a means for switching a direction of the washing water sprayed from the lower spray arm 61 to an upward direction (U-direction) may be further provided on a lower surface 25 of the tub 20 to improve washing efficiency.

Because the configuration already publicly known in the art may be applied to the detailed configuration of the spray part, a description of the specific configuration of the spray part will be omitted hereinafter.

Meanwhile, the accommodation part 50 for accommodating the dishes may be provided in the washing space 21.

The accommodation part 50 may be configured to be withdrawn from the inside of the tub 20 through the opened front side of the tub 20.

FIG. 2 exemplarily illustrates an embodiment in which the accommodation part includes the lower rack 51 positioned at the lower side of the tub 20 and configured to accommodate comparatively large dishes, the upper rack 52 positioned above the lower rack 51 and configured to accommodate dishes with middle sizes, and the top rack 53 positioned at the upper side of the tub 20 and configured to accommodate dishes and the like with small sizes. As illustrated, the description will be made on the basis of the embodiment of the dishwasher 1 in which three accommodation parts 50 are provided. However, the present invention is not limited thereto.

The lower rack 51, the upper rack 52, and the top rack 53 may be configured to be withdrawn to the outside through the opened front side of the tub 20.

To this end, guide rails 54 may be provided on two opposite side walls that define an inner surface of the tub 20. For example, as described below, the guide rails 54 may include an upper rail 542, a lower rail 541, a top rail 543, and the like.

Wheels may be provided on a lower portion of each of the lower rack 51, the upper rack 52, and the top rack 53. A user may withdraw the lower rack 51, the upper rack 52, and the top rack 53 to the outside through the front side of the tub 20 and easily accommodate the dishes on the lower rack 51, the upper rack 52, and the top rack 53 or easily take out the completely washed dishes from the lower rack 51, the upper rack 52, and the top rack 53.

The guide rail 54 may be provided in the form of a stationary guide rail with a simple rail shape for withdrawing or loading the accommodation part 50 or a stretchable guide rail configured to guide the withdrawal and accommodation of the accommodation part 50 and increase a withdrawal distance in accordance with the withdrawal of the accommodation part 50.

Meanwhile, the door 30 serves to open or close the opened front side of the tub 20.

Typically, a hinge part (not illustrated) is provided below the opened front side to open or close the door 30, and the door 30 may be opened while rotating about the hinge part as a rotation axis.

In this case, a handle 31 used to open the door 30 may be provided on an outer surface of the door 30, and a control panel 32 configured to control an operation of the dishwasher 1 may be provided on the outer surface of the door 30.

As illustrated, the control panel 32 may have a button part 34 including a display 33 configured to visually display information on a current operating state or the like of the dishwasher 1, a selection button to which the user's course selection manipulation is inputted, and a power button to which the user's manipulation for turning on or off the power of the dishwasher is inputted.

Meanwhile, a rear panel 30b, which defines an inner surface of the door 30, may define one surface of the tub 20 when the door 30 is closed, and the rear panel 30b may define a seating surface on which the lower rack 51 of the accommodation part 50 may be supported when the door 30 is fully opened.

To this end, when the door 30 is fully opened, the rear panel 30b of the door 30 may be formed in a horizontal plane state in a direction identical to a direction in which the guide rail 54 configured to guide the lower rack 51 extends.

As illustrated in FIG. 3, a detergent supply device 200, which serves to automatically supply a detergent into the tub 20, may be further provided on the rear panel 30b that constitutes the inner surface of the door 30.

In addition, a door position detection part 36 may be provided outside the upper surface of the tub 20 and detect whether the door 30 is in a closed state or an open state. For example, the door position detection part 36 may include a door position sensor S_d or a latch sensor configured to detect a position of a non-illustrated door latch.

Meanwhile, a dry air supply part 80 may be provided below the tub 20 and configured to generate high-temperature or low-temperature dry air and supply the dry air into the washing space in the tub 20.

As illustrated, the dry air supply part 80 may include a filter member 883 configured to filter outside air, a blowing fan 825 configured to generate a dry airflow, a heater 84 configured to heat the dry airflow, and an airflow guide 83 disposed in the tub 20 and configured to guide the dry airflow.

A dry air supply hole 254 may be provided in the lower surface 25 of the tub 20 so that the high-temperature dry air generated by the dry air supply part 80 may be introduced into the tub 20.

The high-temperature dry air or low-temperature dry air generated by the dry air supply part 80 is supplied into the tub 20 during a drying operation S5, such that the efficiency in drying the dishes and the effect of sterilizing the dishes may be remarkably improved in comparison with the related art.

Meanwhile, a part of the airflow, which is supplied into the tub 20 and moistened while the dishes are dried, may be discharged to the outside, and a part of the remaining airflow may be sucked into the dry air supply part 80. The airflow may be discharged by partially opening the door 30 or by a non-illustrated separate air discharge means.

A duct part 811 may be provided outside a left surface 26 or a right surface 27 of the tub 20 to recover humid air from the tub 20.

In addition, a lighting device may be further provided in the tub 20 and serve as a means for illuminating the washing space 21 by emitting visible rays.

In order to effectively illuminate the washing space 21, the lighting device may be disposed on at least any one of a rear surface 23, an upper surface 24, the right surface 27, and the left surface 26 that define the inner surface 20in of the tub 20.

With the above-mentioned lighting device, the user may effectively identify an accommodated state of the dishes mounted on the accommodation part 50 and a washed state of the dishes even in a situation in which the accommodation part 50 is not withdrawn to the outside of the tub 20.

In order to minimize electric power consumption, the lighting device may be turned on by being supplied with electric power only in a case in which the door position detection part 36 indicates that the door 30 is opened.

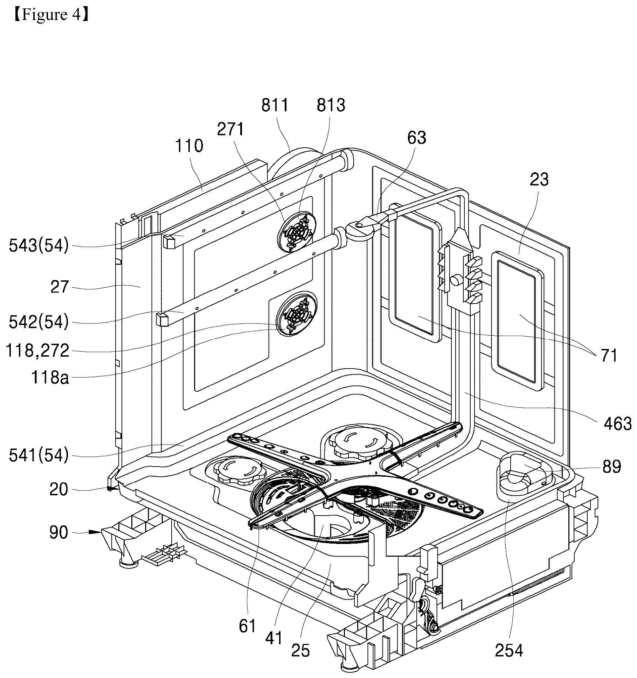

A detailed configuration for each embodiment of the lighting device will be described below with reference to FIG. 4.

### [Detailed Configuration of Lighting Device according to First Embodiment]

Hereinafter, a lighting device 71 according to the first embodiment of the present invention will be described with reference to FIGS. 4 to 17.

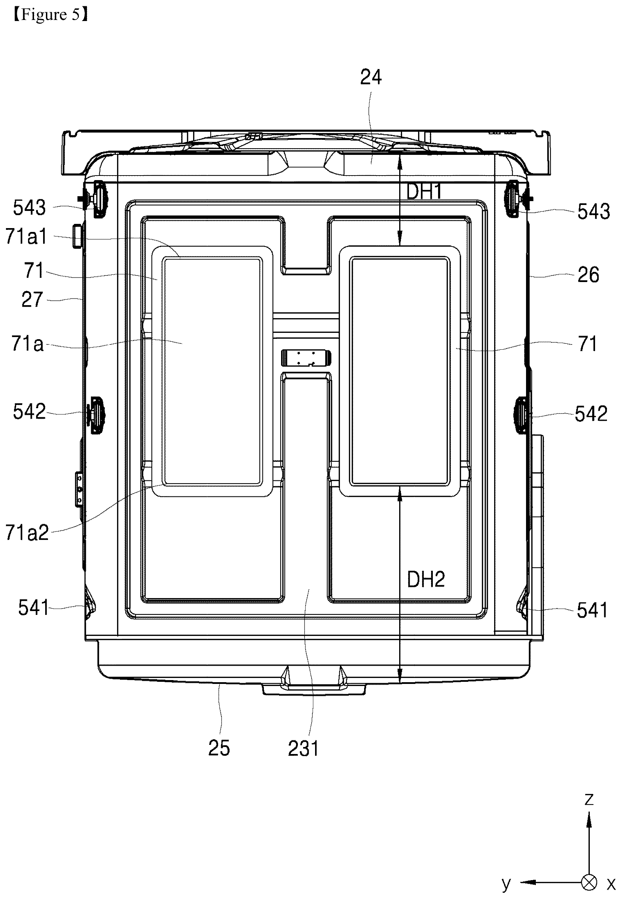

First, with reference to FIGS. 4 and 5, the lighting device 71 according to the first embodiment of the present invention may be disposed to be fixed to the rear surface 23 of the tub 20.

More specifically, as illustrated in FIG. 4, a water jacket 110 may be attached to an outer surface of the right surface 27 of the tub 20 and store washing water to be supplied to the tub 20 and used to wash and rinse the dishes.

In this case, a tub hole 118 may be formed in the water jacket 110 and allow the internal space to communicate with the washing space 21 of the tub 20, and a water jacket communication hole 272 may be penetratively provided in the right surface 27 of the tub 20 while corresponding to the tub hole 118. A grille cap 118a similar in shape to a grille cap 813 of the air suction hole 271 may be coupled to the tub hole 118 to minimize the inflow of the washing water and prevent the inflow of foreign substances.

In addition, as described above, the dry air supply part 80 may be provided below the tub 20 and configured to heat the air discharged from the tub 20 and resupply the air back to the tub 20 during the drying operation.

As illustrated, the dry air supply part 80 may include a suction duct 81 configured to suck the air discharged from the tub 20. The suction duct 81 may be disposed outside the left surface 26 or the right surface 27 of the tub 20.

For example, FIG. 4 illustrates a configuration in which the suction duct 81 is disposed on the outer surface of the right surface 27 of the tub 20 and provided in parallel with the water jacket 110.

Therefore, the air suction hole 271 may be formed through the right surface 27 of the tub 20, a grille cap 8113 coupled to an inlet of the suction duct 81 may be fixed to the air suction hole 271.

However, this is provided for illustrative purposes only. The suction duct 81 may be disposed on the outer surface of the left surface 26 of the tub 20.

As described above, in consideration of the constraint to the positions at which the suction duct 81 of the dry air supply part 80 and the water jacket 110 are disposed, the lighting device 71 may be configured to be fixed to the inner surface 20in of the rear surface 23 of the tub 20 at a position at which interference between the suction duct 81 of the dry air supply part 80 and the water jacket 110 may be minimized.

Meanwhile, the lighting device 71 according to the first embodiment of the present invention may be provided as a plurality of lighting devices 71. More specifically, as illustrated, a pair of lighting devices 71 may be provided to have the same size and external shape.

Because the pair of lighting devices 71 is provided as described above, the number of lighting devices 71 may be minimized, and the number of opening portions 232 to be formed in the rear surface 23 of the tub 20, as described below, may be minimized.

In this case, the pair of lighting devices 71 may be disposed at positions symmetric with respect to a leftward/rightward direction based on a water guide that defines the second supply channel 463.

As illustrated in FIG. 5, a bead forming portion 231 may be provided at a center of the rear surface 23 of the tub 20 and formed convexly rearward to install the second supply channel 463.

The bead forming portion 231 may extend in the upward direction in the extension direction of the second supply channel 463.

Therefore, in order to improve lighting efficiency for the washing space of the tub 20 and minimize interference with the second supply channel 463, the pair of lighting devices 71 may be disposed to be spaced apart from each other in the leftward/rightward direction with the bead forming portion 231 interposed therebetween.

Meanwhile, the pair of lighting devices 71 may be formed to have the same shape and size, but the pair of lighting devices 71 may be disposed at different positions as described above.

Therefore, hereinafter, the description will be made on the basis of the lighting device 71 disposed at the left side. Unless otherwise described, the following contents may be equally applied to the lighting device 71 disposed at the right side.

As illustrated in FIG. 5, the lighting device 71 according to the first embodiment of the present invention is configured to illuminate the inside of the tub 20 in a surface light-emitting manner.

In this case, in order to effectively illuminate the inside of the tub 20, a light-emitting surface 71a of the lighting device 71 may be disposed in parallel with the rear surface 23 of the tub 20.

The light-emitting surface 71a of the lighting device 71 may be provided in a quadrangular shape. More specifically, the light-emitting surface 71a may be provided in a rectangular so that a width in the upward/downward direction is larger than a width in the leftward/rightward direction.

In this case, as illustrated in FIG. 5, a position of the light-emitting surface 71a having a rectangular shape may be set so that an upper end 71a1 is disposed between the top rail 543 and the upper rail 542 based on the upward/downward direction. Particularly, the upper end 71al of the light-emitting surface 71a may be positioned to be closer to the top rail 543 than the upper rail 542.

Therefore, the upper end 71a1 of the light-emitting surface 71a may be positioned between a lower end of the top rack 53, which is supported on the top rail 543 so as to be withdrawable, and an upper end the upper rack 52 supported by the upper rail 542 so as to be withdrawable.

In addition, a position of the light-emitting surface 71a having a rectangular shape may be set so that a lower end 71a2 is disposed between the upper rail 542 and the lower rail 541 based on the upward/downward direction. Particularly, the lower end 71a2 of the light-emitting surface 71a may be positioned to be closer to the upper rail 542 than the lower rail 541.

Therefore, the lower end 71a2 of the light-emitting surface 71a may be disposed to be higher than the upper end of the lower rack 51 supported on the lower rail 541 so as to be withdrawable. The lower end 71a2 of the light-emitting surface 71a may be disposed at almost the same position as the upper end of the lower rack 51.

Therefore, a portion of the light-emitting surface 71a, which is covered by the upper rack 52 and the lower rack 51, may be minimized, and the dishes mounted on the top rack 53, the upper rack 52, and the lower rack 51 may be uniformly irradiated with visible rays, which may prevent a deterioration in luminous efficiency.

In addition, because the positions of the upper end 71a1 and the lower end 71a2 of the light-emitting surface 71a are set as described above, an open area of the opening portion 232 of the tub 20, which needs to be formed rearward of the light-emitting surface 71a, may be remarkably reduced in comparison with the related art.

That is, an open area of the opening portion 232 may be about 50% or less of an overall area of the rear surface 23 of the tub 20 and maintained to be remarkably low in comparison with the related art.

In addition, as illustrated in FIG. 5, the light-emitting surface 71a may be disposed on the rear surface 23 of the tub 20 so that an interval DH1 in the upward/downward direction between the upper end 71a1 of the light-emitting surface 71a and the upper surface 24 of the tub 20 is smaller than an interval DH2 in the upward/downward direction between the lower end 71a2 of the light-emitting surface 71a and the lower surface 25 of the tub 20. That is, the light-emitting surface 71a of the lighting device 71 according to the first embodiment of the present invention may be disposed to be biased and closer to the upper surface 24 than the lower surface 25 of the tub 20.

As illustrated, the upper surface 24 and the lower surface 25 of the tub 20 may be configured to have a three-dimensional shape. Therefore, there may occur a local deviation between the interval DH1 in the upward/downward direction between the upper end 71a1 of the light-emitting surface 71a and the upper surface 24 of the tub 20 and the interval DH2 in the upward/downward direction between the lower end 71a2 of the light-emitting surface 71a and the lower surface 25 of the tub 20. However, despite the occurrence of the deviation, a range of the interval DH1 in the upward/downward direction between the upper end 71a1 of the light-emitting surface 71a and the upper surface 24 of the tub 20 may be smaller than a range of the interval DH2 in the upward/downward direction between the lower end 71a2 of the light-emitting surface 71a and the lower surface 25 of the tub 20.

Because the light-emitting surface 71a of the lighting device 71 is disposed to be biased to the upper surface 24 of the tub 20, the shadows of the dishes, which may be caused by the light-emitting surface 71a having a large surface area, may be minimized, and various dishes accommodated in the accommodation part 50 may be more uniformly illuminated.

Meanwhile, the lighting device 71 according to the first embodiment may be disposed in the tub 20 over the inside and outside of the tub 20 while passing through the opening portion 232 of the tub 20, as described below.

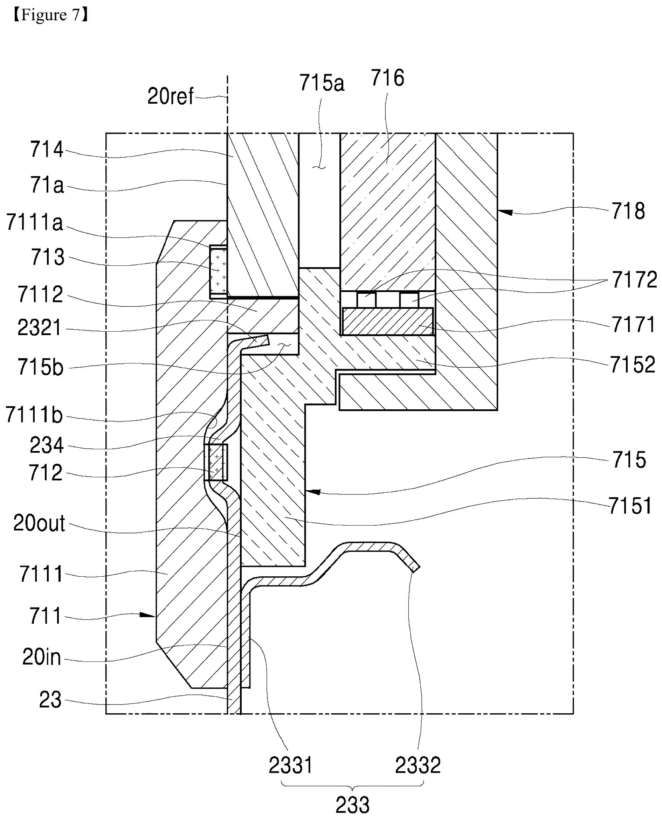

For example, with reference to FIG. 7, the inner surface 20in of the rear surface 23 of the tub 20, which is directed toward the bracket main body 2331, may define a reference surface 20ref extending along the inner surface 20in of the rear surface 23 and configured to provide reference positions at which several components of the lighting device 71 are disposed. For example, as illustrated in FIG. 7, the reference surface 20ref, which extends along the inner surface 20in of the rear surface 23, may partially pass through at least a part of the lighting device 71 (i.e., diffusion plate 714). Some of the components of the lighting device 71 (i.e., the front cover 711) may be disposed inward toward the washing space relative to the reference surface 20ref, and the other components (i.e., the light guide plate 716 and the light source element 7172) may be disposed outward relative to the reference surface 20ref.

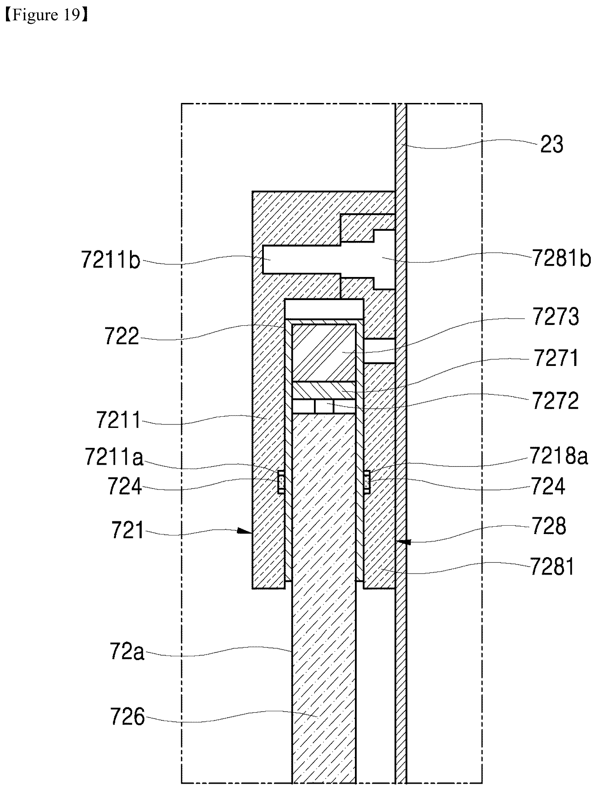

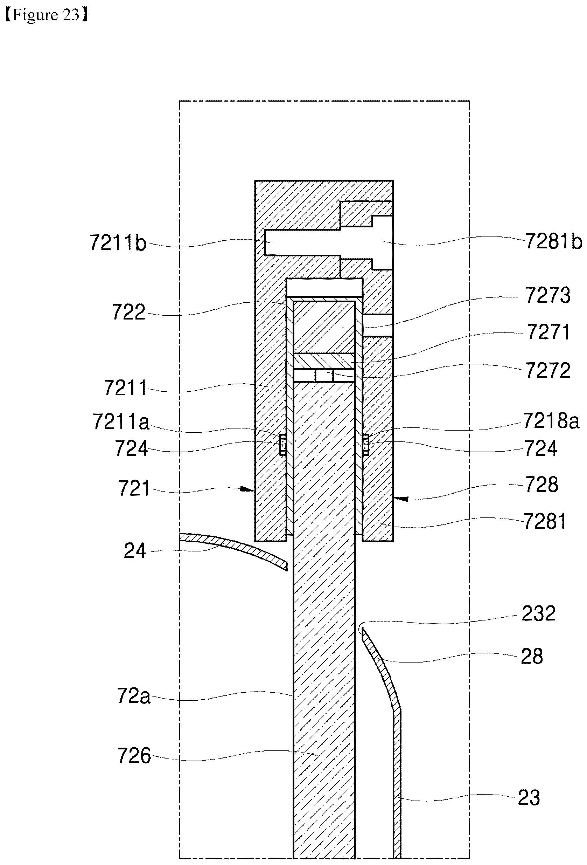

Meanwhile, as in the embodiment illustrated in FIG. 19, the entire lighting device 71 may be disposed in the washing space. The entire reference surface 20ref, which extends along the inner surface 20in of the rear surface 23, may be disposed outward relative to the entire lighting device 71. Meanwhile, as in the embodiment illustrated in FIG. 23, the entire lighting device 71 may be disposed forward relative to the inner surface 20in of the rear surface 23. The reference surface 20ref, which extends along the inner surface 20in of the rear surface 23, may be disposed outward relative to the lighting device 71. That is, a light source part 717, which corresponds to an electrical component, is disposed outside the tub 20, which may minimize a likelihood that the light source part 717 is damaged by the washing water.

In addition, only some of the components of the lighting device 71 may be disposed in the tub 20, which may minimize a volume of the washing space 21 of the tub 20, which is occupied by the lighting device 71 in the forward/rearward direction, and minimize a width of the lighting device 71 in the forward/rearward direction.

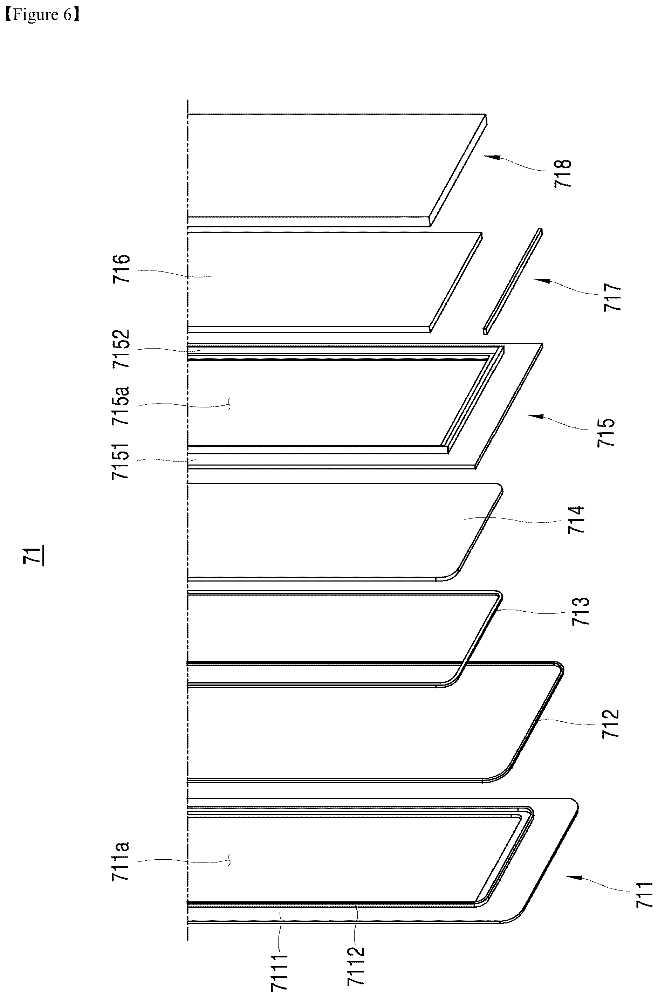

Hereinafter, a detailed configuration of the lighting device 71 partially disposed in the tub 20 according to the first embodiment of the present invention will be described with reference to FIGS. 6 and 7.

As illustrated in FIGS. 6 and 7, the lighting device 71 according to the first embodiment of the present invention the light source part 717 configured to generate visible rays, a light guide plate 716 configured to switch movement paths of visible rays generated by the light source part 717, a mid-casing 715 configured to accommodate and support the light source part 717 and the light guide plate 716, a rear cover 718 coupled to a rear side of the mid-casing 715, a diffusion plate 714 configured to define the light-emitting surface 71a, and a front cover 711 configured to fix the diffusion plate 714 to the rear surface 23 of the tub 20.

The light source part 717 may be disposed outside the tub 20 and serve to generate visible rays by receiving external electric power.

That is, as illustrated in FIG. 7, the light source part 717, which corresponds to an electrical component, may be disposed outside the tub 20, more specifically, supported and fixed by the mid-casing 715 at a position spaced apart rearward from the outer surface 20out of the rear surface 23 of the tub 20 so that an effect of washing water on the light source part 717 may be minimized.

For example, the light source part 717 may include at least one light source element 7172, and a circuit board 7171 on which at least one light source element 7172 is mounted.

Any means may be applied as the light source element 7172 without limitation as long as the mean may generate predetermined visible rays by receiving electric power. For example, an LED element may be applied as light source element 7172.

Hereinafter, the description will be made on the basis of the embodiment in which an LED element is applied as the light source element 7172. However, the present invention is not limited thereto.

As illustrated, in order to minimize a size of the lighting device 71 in the forward/rearward direction and minimize the number of light source elements 7172, the visible rays generated by the light source element 7172 may be introduced through one side edge of the light guide plate 716 and enter the inside of the light guide plate 716.

For example, FIGS. 6 and 7 illustrate a configuration in which the circuit board 7171 and the light source element 7172 are arranged in parallel with a lower end edge of the light guide plate 716 so that the light source element 7172 may emit visible rays toward the lower end edge of the light guide plate 716.

However, the present invention is not limited thereto. The circuit board 7171 and the light source element 7172 may be arranged in parallel with an upper end edge or left and right edges of the light guide plate 716. Hereinafter, for example, the description will be made on the basis of the configuration in which the circuit board 7171 and the light source element 7172 are arranged in parallel with the lower end edge of the light guide plate 716.

In case that the circuit board 7171 and the light source element 7172 are arranged in parallel with the lower end edge of the light guide plate 716 as described above, the width of the circuit board 7171 in the forward/rearward direction may be very smaller than the width in the leftward/rightward direction. That is, the leftward/rightward direction may be a longitudinal direction of the circuit board 7171.

In this case, as illustrated in FIG. 7, in order to minimize the width of the lighting device 71 in the forward/rearward direction, the width of the circuit board 7171 in the forward/rearward direction may be equal to or smaller than a thickness of the light guide plate 716 in the forward/rearward direction.

As described above, the plurality of light source elements 7172 may be arranged in the longitudinal direction, i.e., the leftward/rightward direction of the circuit board 7171 so that visible rays may be uniformly transmitted through the lower end edge of the light guide plate 716. An interval in the leftward/rightward direction between the light source elements 7172 may be set to be maintained to be approximately constantly and equally.

The light guide plate 716, together with the light source part 717, is disposed outside the tub 20 and serves to switch the movement path of the visible rays generated by the light source element 7172 toward the diffusion plate 714 disposed at the front side.

As described above, the visible rays generated by the light source element 7172 may be introduced through the lower end edge of the light guide plate 716. The movement direction of the visible rays may be switched so that the visible rays introduced into the lower end edge of the light guide plate 716 are reflected and dispersed to propagate toward the front surface arranged in parallel with the rear surface of the diffusion plate 714 to be described below.

The rear surface, the upper end edge, and the left and right edges of the light guide plate 716, which exclude the front surface, do not transmit visible rays because of the mid-casing 715 and the rear cover 718, such that the visible rays cannot be transmitted. The visible rays may propagate to the outside of the light guide plate 716 only through the front surface of the light guide plate 716.

The mid-casing 715 serves to accommodate the light source part 717 and the light guide plate 716 and fix the light source part 717 and the light guide plate 716 to the tub 20 at the position spaced apart rearward from the outer surface 20out of the rear surface 23 of the tub 20.

To this end, as illustrated in FIG. 7, the mid-casing 715 may have a casing main body 7151 tightly attached and fixed to the tub 20, and a guide rib 7152 protruding rearward from the casing main body 7151.

The casing main body 7151 may be provided in the form of a picture frame extending along an edge of the opening portion 232 of the tub 20. An inner region of the casing main body 7151 is opened in the forward/rearward direction so that visible rays emitted from the front surface of the light guide plate 716 disposed at the rear side may pass through the casing main body 7151.

In this case, in order to prevent the forward withdrawal of the light guide plate 716, an open area of the open region of the casing main body 7151 may be smaller than an area of the front surface of the light guide plate 716.

Meanwhile, a front stepped surface may be formed at a front side of the casing main body 7151 and formed concavely rearward while being directed toward the open region.

The front stepped surface, which is formed concavely as described above, may define a first accommodation space 715b into which a support rib 7112 of the front cover 711 and the diffusion plate 714 are inserted.

As described below, a predetermined gap may be formed between the front stepped surface of the casing main body 7151 and the support rib 7112 of the front cover 711, and a bending portion 2321, which defines an edge of the opening portion 232 of the tub 20, may be inserted into the predetermined gap.

The guide rib 7152 is integrated with a rear surface of the casing main body 7151 and serves to define a second accommodation space 715a in which the light source part 717 and the light guide plate 716 may be accommodated.

To this end, the guide rib 7152 may be disposed on the rear surface of the casing main body 7151 and provided in a barrier shape extending along an outer periphery edge of the light guide plate 716 in parallel with the outer periphery edge of the light guide plate 716.

Therefore, the second accommodation space 715a may be formed so that the entire rear surface may be opened by the guide rib 7152, and the front surface may be partially opened.

In this case, as illustrated, in order to prevent the forward withdrawal of the light guide plate 716 and the light source part 717, an open area of the front surface of the second accommodation space 715a may be smaller than an area of the front surface of the light guide plate 716.

In addition, an open area of the rear surface of the second accommodation space 715a may be larger than the light guide plate 716 so that the light guide plate 716 and the light source part 717 may be easily disposed.

Meanwhile, as described below, the mid-casing 715 may be detachably coupled to the tub 20 in a non-adhesive manner by a rear bracket 233 fixed to the outer surface 20out of the rear surface 23 of the tub 20.

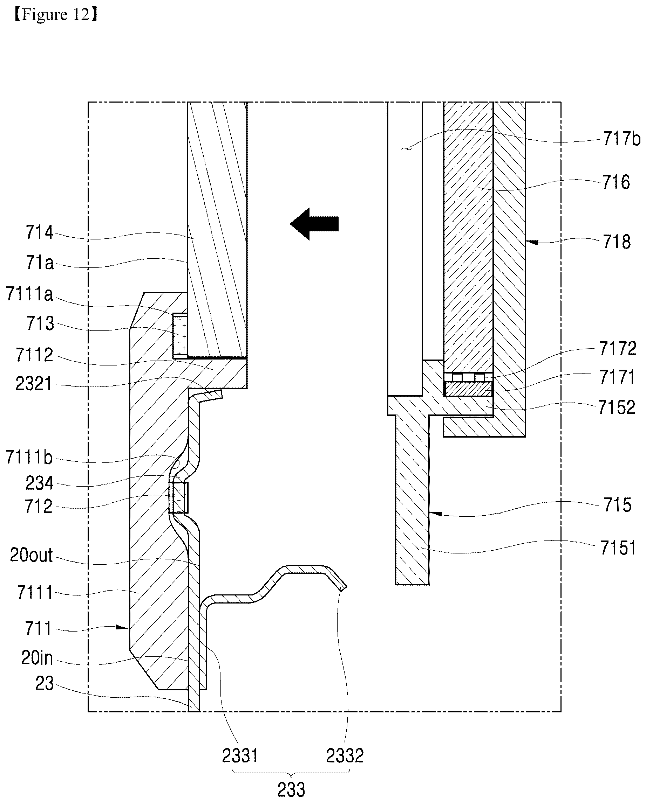

A detailed configuration of the rear bracket 233 will be described below with reference to FIGS. 12 to 16.

In addition, as described below, the mid-casing 715 disposed outside the tub 20 may be fixed to the tub 20 by the rear bracket 233 in a non-fastened state to the front cover 711 disposed in the tub 20.

Therefore, a fastening hole, through which a mutual fastening means or a mutual coupling means configured to fasten the component disposed inside the tub 20 and the component disposed outside the tub 20 in the related art needs to pass, may be excluded from the rear surface 23 of the tub 20. Therefore, the lighting device 71 according to the first embodiment of the present invention may basically prevent a likelihood of the occurrence of a leak of water through the fastening hole and remarkably reduce the manufacturing costs and manufacturing time in comparison with the related art.

The rear cover 718 may be coupled to a rear side of the second accommodation space 715a of the mid-casing 715 that accommodates the light guide plate 716 and the light source part 717. The rear cover 718 serves to protect the light guide plate 716 and the light source part 717 by closing the rear surface of the second accommodation space 715a.

To this end, the rear cover 718 may have a box shape having an opened front side, and the remaining portion excluding the front side may be approximately blocked.

As described above, the rear cover 718 may be made of an opaque material, which cannot transmit visible rays, in order to improve the lighting efficiency by allowing the visible rays generated by the light source part 717 to be transmitted to the diffusion plate 714 only through the front surface of the light guide plate 716.

The diffusion plate 714 serves to define the light-emitting surface 71a and uniformly diffuse the visible rays, which are introduced through the light guide plate 716 and the opening portion 232 of the tub 20, toward the light-emitting surface 71a.

In this case, as illustrated in FIG. 7, the diffusion plate 714 may be supported by the front cover 711 so as to be disposed in a state of being inserted into the opening portion 232 of the tub 20 as a whole.

That is, the opening portion 232 of the tub 20 may be at least partially closed by the diffusion plate 714.

Therefore, an outer periphery edge of the diffusion plate 714 may have a shape corresponding to an edge of the opening portion 232 of the tub 20.

However, because the support rib 7112 of the front cover 711 is fitted between the edge of the opening portion 232 of the tub 20 and an edge of an outer periphery of the diffusion plate 714, a vertical cross-sectional area of the diffusion plate 714 may be smaller than an open area of the opening portion 232 of the tub 20.

Meanwhile, FIG. 7 illustrates a state in which the diffusion plate 714 is disposed in a state in which no stepped portion is formed between the front surface of the diffusion plate 714 and the rear surface 23 of the tub 20. However, this configuration is provided for illustrative purposes only. The front surface of the diffusion plate 714 may further protrude forward than the rear surface 23 of the tub 20 or be disposed rearward of the rear surface 23 of the tub 20 in accordance with a thickness of the diffusion plate 714, such that a stepped portion may be formed.

As described below, the diffusion plate 714 may be fixed indirectly to the rear surface 23 of the tub 20 by being attached and fixed to the front cover 711 by a second sealing member 713.

Meanwhile, the front cover 711 is disposed in the tub 20 and serves to support the diffusion plate 714 and fix the diffusion plate 714 indirectly to the rear surface 23 of the tub 20 in a state in which the diffusion plate 714 may effectively illuminate the washing space 21 of the tub 20.

The front cover 711 may include a cover main body 7111 provided in the form of a picture frame having an open region 711a formed at an inner center side thereof so that the diffusion plate 714 may effectively illuminate the washing space 21 of the tub 20.

An open area of the open region 711a of the cover main body 7111 defines an area of the light-emitting surface 71a.

That is, inner edges of the front cover 711 having a picture frame shape define the upper end 71a1, the lower end 71a2, a left end 71a3, and a right end 71a4 of the light-emitting surface 71a.

In this case, as illustrated in FIG. 7, the cover main body 7111 may be attached to the rear surface 23 of the tub 20 in a surface contact state so as to be disposed in the tub 20 as a whole.

More specifically, a rear surface portion of the rear surface of the cover main body 7111, which is formed between the support rib 7112 and an outer edge of the cover main body 7111, may be formed in parallel with the rear surface 23 of the tub 20. As described above, the rear surface portion formed between the support rib 7112 and the outer edge of the cover main body 7111 may be attached to the rear surface of the tub 20 in a surface contact state.

In this case, the cover main body 7111 may be attached to the inner surface 20in of the rear surface 23 of the tub 20 by using a first sealing member 712.

That is, as illustrated in FIG. 6, the first sealing member 712 may extend in a shape surrounding the inner edge of the cover main body 7111 and be provided in the form of an elastic ring having predetermined elasticity.

In this case, the first sealing member 712 may include a predetermined bonding agent component.

Therefore, the first sealing member 712 may be compressed between the rear surface of the cover main body 7111 and the rear surface 23 of the tub 20, such that the cover main body 7111 may be bonded to the rear surface of the tub 20.

Because the first sealing member 712 is simultaneously compressed and elastically deformed, a portion between the cover main body 7111 and the rear surface 23 of the tub 20 may be effectively sealed.

That is, the first sealing member 712 may simultaneously perform a bonding function of attaching the cover main body 7111 to the tub 20 and a sealing function of preventing the occurrence of a leak of water between the cover main body 7111 and the rear surface 23 of the tub 20.

Therefore, unlike the related art, it is possible to exclude the fastening means, such as screw bolts or rivets, for fixing the cover main body 7111 to the tub 20 and the fastening hole penetrated by the fastening means.

Meanwhile, a first groove portion 7111b may be provided in the rear surface of the front cover 711 disposed to face the inner surface 20in of the rear surface 23 of the tub 20. The first groove portion 7111b may be provided at the position at which the first sealing member 712 is disposed. The first groove portion 7111b may be formed concavely toward the washing space 21 of the tub 20, as illustrated.

As illustrated, the first groove portion 7111b may have an arc-shaped cross-section having a predetermined curvature.

A protruding surface 234, which protrudes forward so as to be inserted into the first sealing member 712, may be formed in the rear surface 23 of the tub 20 and provided at the position corresponding to the first groove portion 7111b.

The protruding surface 234 may be formed by plastically deforming a part of the rear surface 23 of the tub 20 by press processing.

With the first groove portion 7111b of the cover main body 7111 and the protruding surface 234 of the tub 20, the contact area and bonding area between the cover main body 7111 and the rear surface 23 of the tub 20 may increase, and the bondability and sealability between the cover main body 7111 and the rear surface 23 may be further improved by the first sealing member 712.

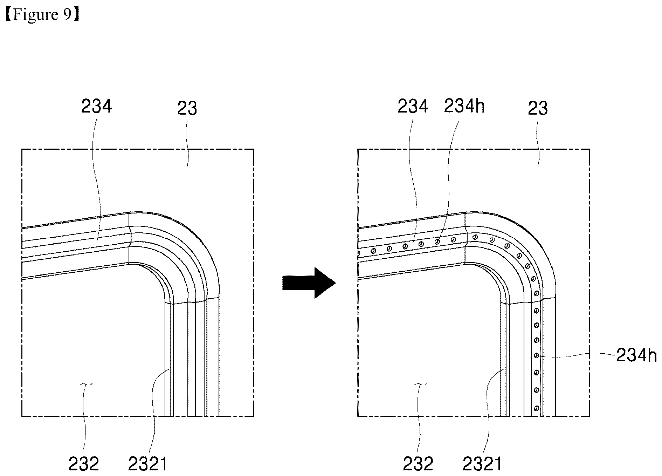

Meanwhile, because the protruding surface 234 is formed by plastically deforming a part of the rear surface 23 of the tub 20 along a periphery of the opening portion 232 in a bead forming manner, the opening portion 232 may also serve to reinforce the rear surface 23 of the tub 20 with weakened rigidity. A detailed configuration of the protruding surface 234 will be described below with reference to FIG. 9.

Meanwhile, the support rib 7112, which protrudes rearward, may be integrally provided on the rear surface of the cover main body 7111 to allow the front cover 711 to serve to fix the diffusion plate 714 indirectly to the rear surface 23 of the tub 20.

The support rib 7112 may be provided in a barrier shape extending along an outer periphery edge of the diffusion plate 714 in parallel with the outer periphery edge of the diffusion plate 714.

As illustrated in FIG. 7, the diffusion plate 714 may be supported on the support rib 7112 in a state in which the inner surface of the support rib 7112 is in surface contact with an outer peripheral edge surface of the diffusion plate 714.

In addition, the diffusion plate 714 may be fixed to the rear surface 23 of the tub 20 in a state in which the diffusion plate 714 is attached to the cover main body 7111.

The diffusion plate 714 may be attached to the cover main body 7111 by using the second sealing member 713.

Like the first sealing member 712, the second sealing member 713 may extend in a shape surrounding the inner edge of the cover main body 7111 and be provided in the form of an elastic ring having predetermined elasticity.

In this case, the second sealing member 713 may include a predetermined bonding agent component.

Therefore, the second sealing member 713 may be compressed between the rear surface of the cover main body 7111 and the front surface of the diffusion plate 714, such that the diffusion plate 714 may be bonded to the rear surface of the cover main body 7111.

Because the second sealing member 713 is simultaneously compressed and elastically deformed, a portion between the rear surface of the cover main body 7111 and the front surface of the diffusion plate 714 may be effectively sealed.

That is, like the first sealing member 712, the second sealing member 713 may simultaneously perform a bonding function of attaching the diffusion plate 714 to the cover main body 7111 and a sealing function of preventing the occurrence of a leak of water between the cover main body 7111 and the diffusion plate 714.

Meanwhile, a second groove portion 7111a may be provided in the rear surface of the cover main body 7111 disposed to face the front surface of the diffusion plate 714. The second groove portion 7111a may be provided at the position at which the second sealing member 713 is disposed. The second groove portion 7111a may be formed concavely toward the washing space 21 of the tub 20, as illustrated.

A depth of the second groove portion 7111a may be smaller than a thickness of the second sealing member 713 before the deformation. Therefore, as the diffusion plate 714 is attached to the cover main body 7111, the second sealing member 713 is compressed and elastically deformed. As an empty space of the second groove portion 7111a is filled with the elastically deformed second sealing member 713, the bonding area and sealing area between the cover main body 7111 and the diffusion plate 714 may expand by the width of the second groove portion 7111a.

### [Detailed Configuration of Lighting Device according to First Embodiment]

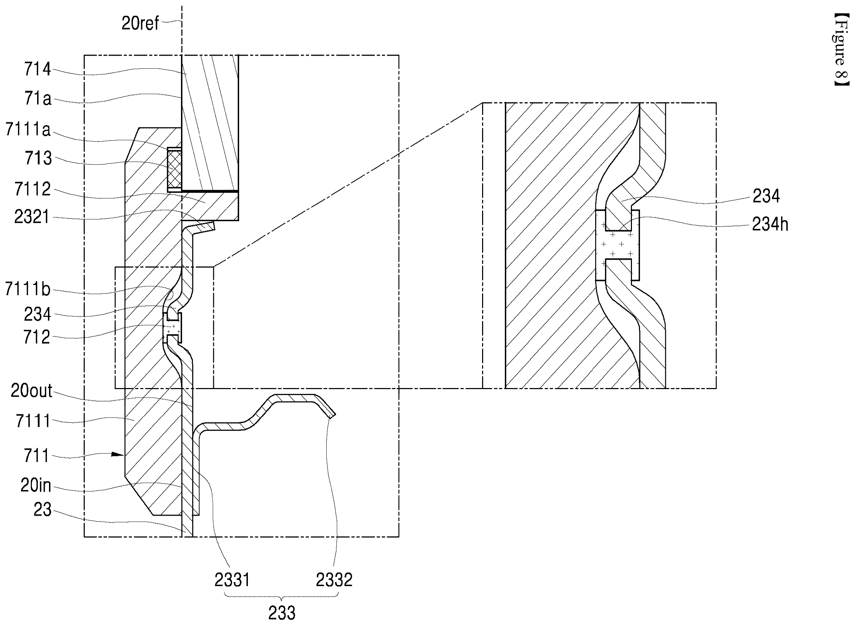

Hereinafter, a process of fastening the lighting device 71 according to the first embodiment of the present invention to the rear surface 23 of the tub 20 will be described with reference to FIGS. 8 to 13.

As described above, in the lighting device 71 according to the first embodiment of the present invention, only some of the components of the lighting device 71 are disposed inside the tub 20, and some of the remaining components are disposed outside the tub 20.

Therefore, in consideration of convenience of fastening or assembling, the lighting device 71 according to the first embodiment of the present invention may be configured such that the components disposed inside the tub 20 are provided inside the tub 20 and fastened and assembled to the tub 20, and the components disposed outside the tub 20 are provided outside the tub 20 and fastened and assembled to the tub 20.

Among the components, the components disposed inside the tub 20 may be the front cover 711 and the diffusion plate 714.

FIG. 8 illustrates a process in which the front cover 711 and the diffusion plate 714, which are disposed over the inside and outside of the tub 20 as described above, are provided inside the tub 20 and fastened and assembled to the rear surface 23 of the tub 20.

With reference to FIG. 8, the front cover 711 and the diffusion plate 714 may be coupled to each other in advance before being fastened to the tub 20, such that a partial assembly may be formed.

That is, as described above, the cover main body 7111 of the front cover 711 and the diffusion plate 714 may be attached to each other by the second sealing member 713, such that the partial assembly may be formed.

The partial assembly, which is in the state in which the diffusion plate 714 is attached to the front cover 711, may be introduced into the tub 20 through a front side 22 of the tub 20.

As illustrated, the support rib 7112 of the front cover 711 may be configured to have an external shape and size corresponding to a shape and size of the opening portion 232 of the tub 20.

Therefore, the front cover 711 and the diffusion plate 714 may be coupled to the rear surface 23 of the tub 20 by moving the partial assembly, which is in the state in which the diffusion plate 714 is attached to the front cover 711, into the tub 20 and then inserting the support rib 7112 into the opening portion 232 at the front side of the opening portion 232.

In this case, as illustrated, the bending portion 2321, which is bent rearward, is integrally provided at the edge of the opening portion 232, such that an insertion/movement direction of the front cover 711 and the diffusion plate 714 may be guided.

That is, the support rib 7112 and the bending portion 2321 formed on the opening portion 232 may be fastening guides that guide the assembling position and the insertion/movement of the front cover 711 and the diffusion plate 714.

As described above, because the assembling position and the insertion/movement of the front cover 711 and the diffusion plate 714 may be smoothly guided, the front cover 711 and the diffusion plate 714 may be fastened or assembled to the rear surface 23 of the tub 20 as the front cover 711 and the diffusion plate 714 are simply compressed or tightly attached to the rear surface 23 of the tub 20.

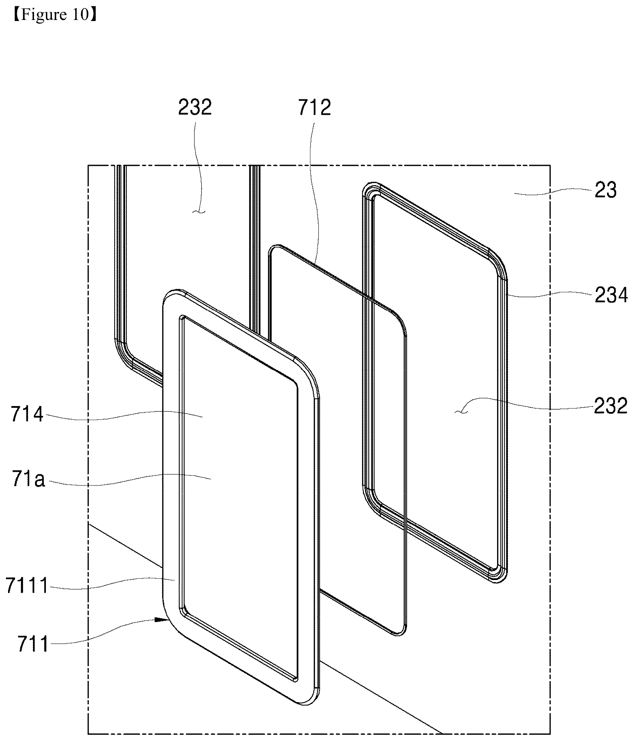

Meanwhile, as illustrated in FIG. 10, the first sealing member 712 may be attached in advance to any one of the first groove portion 7111b of the cover main body 7111 and the protruding surface 234 of the rear surface 23 of the tub 20 before the front cover 711 and the diffusion plate 714 is assembled to the rear surface 23 of the tub 20.

In this case, as illustrated in FIG. 9, a plurality of through-holes 234h, which communicate with one another in the forward/rearward direction, may be additionally formed in the protruding surface 234 of the tub 20.

The plurality of through-holes 234h may be arranged at equal intervals along the protruding surface 234.

Therefore, when the first sealing member 712 is compressed, a part of the first sealing member 712 may pass through the plurality of through-holes 234h and pushed toward the rear side of the protruding surface 234.

Therefore, with the plurality of through-holes 234h, the bonding area and sealing area of the first sealing member 712 may expand toward the rear side of the protruding surface 234.

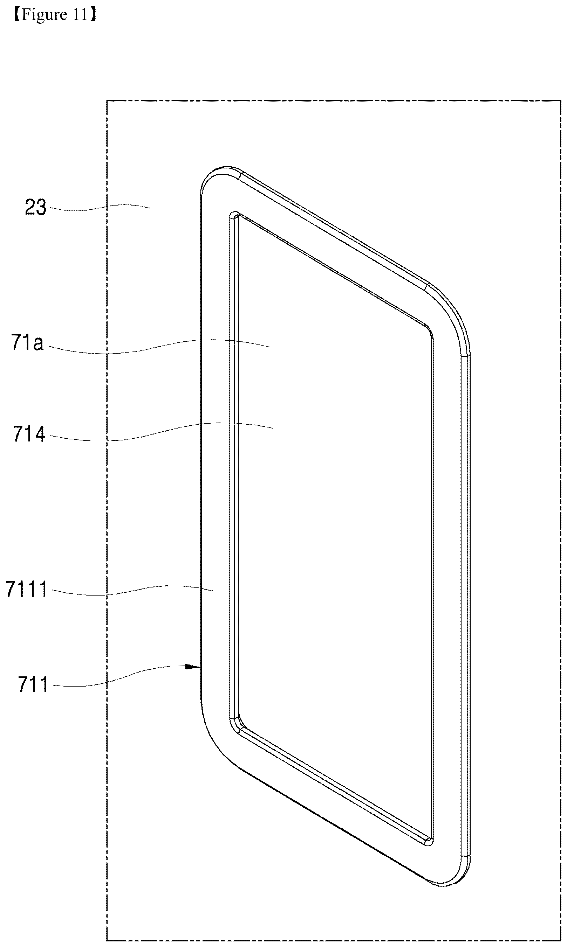

As illustrated in FIG. 11, with the above-mentioned process, when the front cover 711 and the diffusion plate 714 disposed in the tub 20 are provided inside the tub 20 and fastened and assembled to the rear surface 23 of the tub 20, the components disposed outside the tub 20 may be provided outside the rear surface 23 of the tub 20 and fastened and assembled to the rear surface 23 of the tub 20.

The components disposed outside the tub 20 may be the light source part 717, the light guide plate 716, the mid-casing 715, and the rear cover 718 that are the remaining parts excluding the front cover 711 and the diffusion plate 714.

Similar to the front cover 711 and the diffusion plate 714, the light source part 717, the light guide plate 716, the mid-casing 715, and the rear cover 718 are coupled in advance before being fastened to the tub 20, as illustrated in FIG. 12, such that the partial assembly may be formed.

As illustrated in FIG. 12, the partial assembly, which includes the light source part 717, the light guide plate 716, the mid-casing 715, and the rear cover 718, may be fitted with the outer surface 20out of the rear surface 23 of the tub 20 by being simply moved horizontally toward the outer surface 20out of the rear surface 23 of the tub 20 from the rear side disposed outside the tub 20.

As a configuration for forming the simple fitting coupling, the rear bracket 233 may be provided on the outer surface 20out of the rear surface 23 of the tub 20. The rear bracket 233 may be disposed around the opening portion 232 of the tub 20 and fix the partial assembly, which includes the mid-casing 715, to the tub 20.

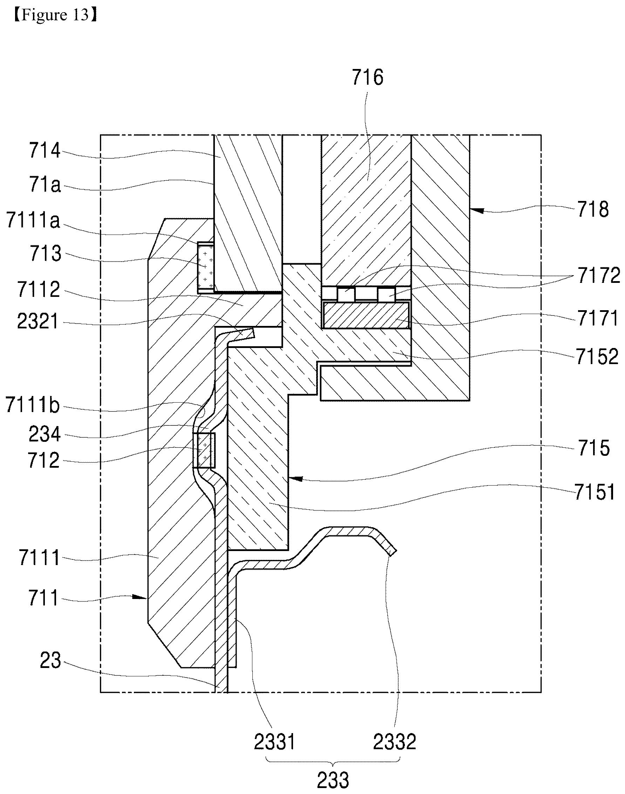

As illustrated in FIGS. 12 and 13, the rear bracket 233 may include a bracket main body 2331 extending along a periphery of the opening portion 232 of the tub 20 and fixed to the outer surface 20out of the rear surface 23 of the tub 20, and a plurality of fixing portions 2332 each having one end that is a fixed end integrally connected to the bracket main body 2331, and the other end that is a free end extending toward the opening portion 232 of the tub 20.

The bracket main body 2331 may have a shape surrounding the periphery of the opening portion 232 of the tub 20 and linearly extend so as to have an approximately constant width along the edge of the opening portion 232.

The bracket main body 2331 may be attached and fixed to and in surface contact with the outer surface 20out of the rear surface 23 of the tub 20. Particularly, the bracket main body 2331 may be securely attached to the outer surface 20out of the rear surface 23 of the tub 20 by welding.

Therefore, the bracket main body 2331, which is attached by welding, may additionally provide an effect of reinforcing the rigidity of the periphery of the opening portion 232 of the tub 20.

The plurality of fixing portions 2332 serves to elastically couple the outer periphery edge of the mid-casing 715 and elastically support the mid-casing 715.

Because the other end of each of the plurality of fixing portions 2332 is configured as a free end extending toward the opening portion 232 of the tub 20, the plurality of fixing portions 2332 may serve as springs for elastically the outer periphery edge of the mid-casing 715.

In order to allow the fixing portion 2332 to serve as a spring as described above, the fixing portion 2332 may have a cross-sectional shape bent in two steps and including a first horizontal surface portion disposed at a constant interval in the upward/downward direction from the opening portion 232 of the tub 20, a first inclined surface portion continuously formed from the first horizontal surface portion and bent in a direction toward the opening portion 232 of the tub 20, a second horizontal surface portion continuously formed from the first inclined surface portion and disposed at a constant interval in the upward/downward direction from the opening portion 232 of the tub 20, and a second inclined surface portion continuously formed from the second horizontal surface portion and bent in a direction away from the opening portion 232 of the tub 20.

In this case, the width in the upward/downward direction and the width in the leftward/rightward direction, which are defined between the second horizontal surface portions of the fixing portions 2332, may be smaller than the width in the upward/downward direction and the width in the leftward/rightward direction of the mid-casing 715.

Therefore, when the horizontal movement is initiated in the state in which the partial assembly including the light source part 717, the light guide plate 716, the mid-casing 715, and the rear cover 718 is disposed in parallel with the rear surface 23 of the tub 20, the outer peripheral edge of the mid-casing 715 comes into contact with the second inclined surface portion of the fixing portion 2332 first.

When the partial assembly including the light source part 717, the light guide plate 716, the mid-casing 715, and the rear cover 718 is pressed and pushed forward in the state in which the outer peripheral edge of the mid-casing 715 is in contact with the second inclined portion of the fixing portion 2332, the width between the second horizontal surface portions of the fixing portions 2332 is elastically deformed by a width of the mid-casing 715.

When the partial assembly is moved through the section between the second horizontal surface portions, an elastic force, which restores the fixing portion 2332 to an original shape, is applied to the outer periphery edge of the mid-casing 715 while the partial assembly passes through the section between the first inclined surface portions.

The partial assembly including the mid-casing 715 is pressed against the outer surface 20out of the rear surface 23 of the tub 20 by the elastic force of the fixing portion 2332, such that the withdrawal of partial assembly including the mid-casing 715 may be prevented.

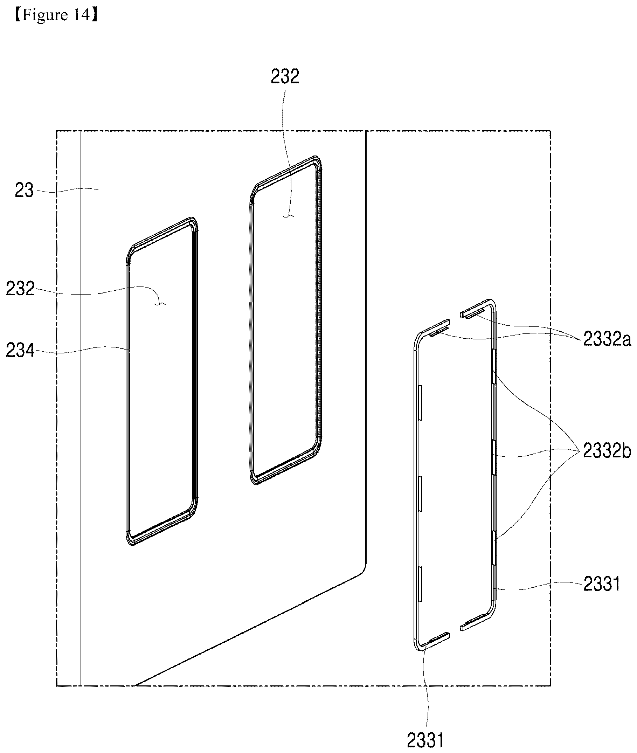

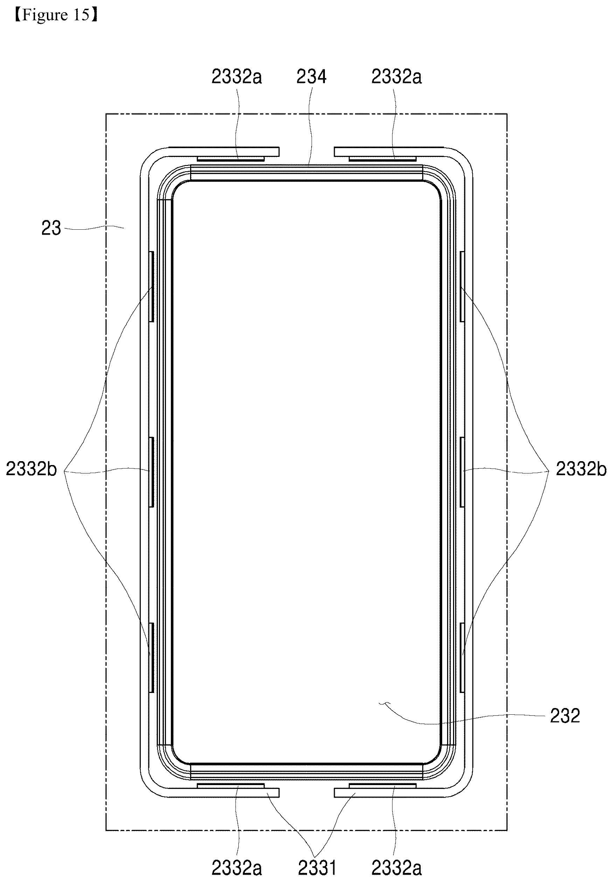

This will be described more specifically with reference to FIGS. 14 and 15.

With reference to FIGS. 14 and 15, the rear bracket 233 may be divided into a pair of rear brackets 233 disposed based on a vertical line passing through the opening portion 232 of the tub 20.

Because the pair of rear brackets 233 is separated and disposed to have a symmetric shape, the manufacturing costs for the rear bracket 233 may be remarkably reduced.

Meanwhile, the plurality of fixing portions 2332, which constitutes the rear brackets 233, may include a pair of first fixing portions 2332a disposed at positions spaced apart from each other in the upward/downward direction with the mid-casing 715 interposed therebetween, and a pair of second fixing portions 2332b disposed at positions spaced apart from each other in the leftward/rightward direction with the mid-casing 715 interposed therebetween.

FIGS. 14 and 15 illustrate that a total of two pairs of first fixing portions 2332a and a total of three pairs of second fixing portions 2332b are integrated with the bracket main body 2331. However, this is provided for illustrative purposes only. The number of first fixing portions 2332a and the number of second fixing portions 2332b may be adjusted depending on the size of the light-emitting surface 71a of the lighting device 71 and the size of the opening portion 232 of the tub 20. Hereinafter, for convenience, the description will be made on the basis of the configuration in which a total of two pairs of first fixing portions 2332a and a total of three pairs of second fixing portions 2332b are provided.

As described above, the interval in the upward/downward direction between the pair of first fixing portions 2332a disposed to face each other by the cross-sectional shape of the fixing portion 2332 bent in two steps may vary in a direction toward the bracket main body 2331.

In this case, a minimum interval in the upward/downward direction between the pair of first fixing portions 2332a disposed to face each other may be formed between the second horizontal surface portions of the pair of first fixing portions 2332a disposed to face each other, and the minimum interval in the upward/downward direction between the pair of first fixing portions 2332a disposed to face each other may be smaller than the width in the upward/downward direction of the mid-casing 715.

In addition, a maximum interval in the upward/downward direction between the pair of first fixing portions 2332a disposed to face each other may be formed between the first horizontal surface portions of the pair of first fixing portions 2332a disposed to face each other, and the maximum interval in the upward/downward direction between the pair of first fixing portions 2332a disposed to face each other may be equal to or larger than the width in the upward/downward direction of the mid-casing 715.

Likewise, the interval in the leftward/rightward direction between the pair of second fixing portions 2332b disposed to face each other by the cross-sectional shape of the fixing portion 2332 bent in two steps may vary in the direction toward the bracket main body 2331.

In this case, a minimum interval in the leftward/rightward direction between the pair of second fixing portions 2332b disposed to face each other may be formed between the second horizontal surface portions of the pair of second fixing portions 2332b disposed to face each other, and the minimum interval in the leftward/rightward direction between the pair of second fixing portions 2332b disposed to face each other may be smaller than the width in the leftward/rightward direction of the mid-casing 715.

In addition, a maximum interval in the leftward/rightward direction between the pair of second fixing portions 2332b disposed to face each other may be formed between the first horizontal surface portions of the pair of second fixing portions 2332b disposed to face each other, and the maximum interval in the leftward/rightward direction between the pair of second fixing portions 2332b disposed to face each other may be equal to or larger than the width in the leftward/rightward direction of the mid-casing 715.

Because the sizes of the first fixing portion 2332a and the second fixing portion 2332b, which constitute the rear bracket 233, relative to the mid-casing 715 are restricted as described above, the partial assembly including the mid-casing 715 may be detachably and elastically fixed to the rear surface 23 of the tub 20 in a non-adhesive manner.

### [Arrangement Structure of Light Source Part of Lighting Device according to First Embodiment]

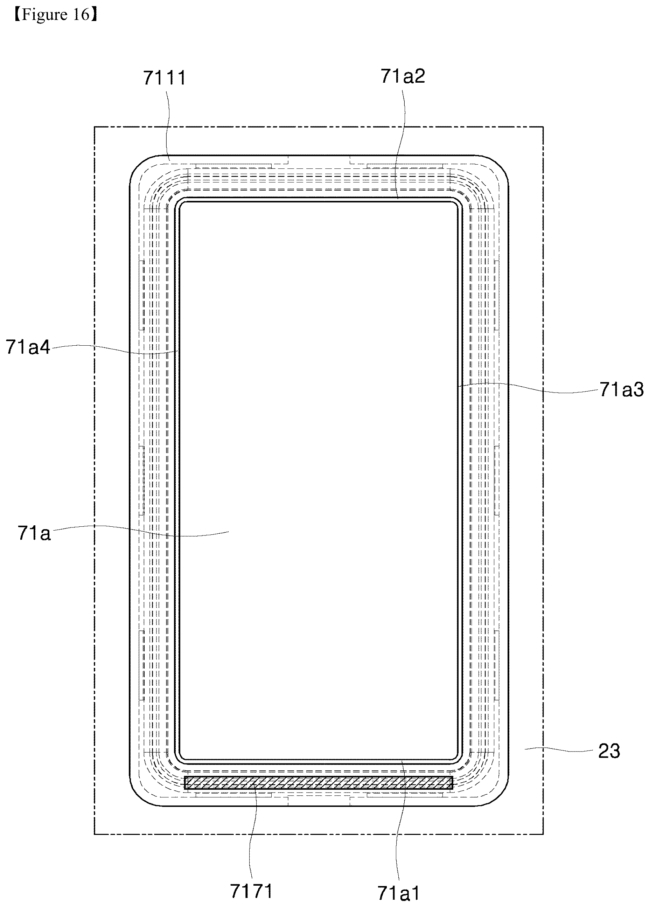

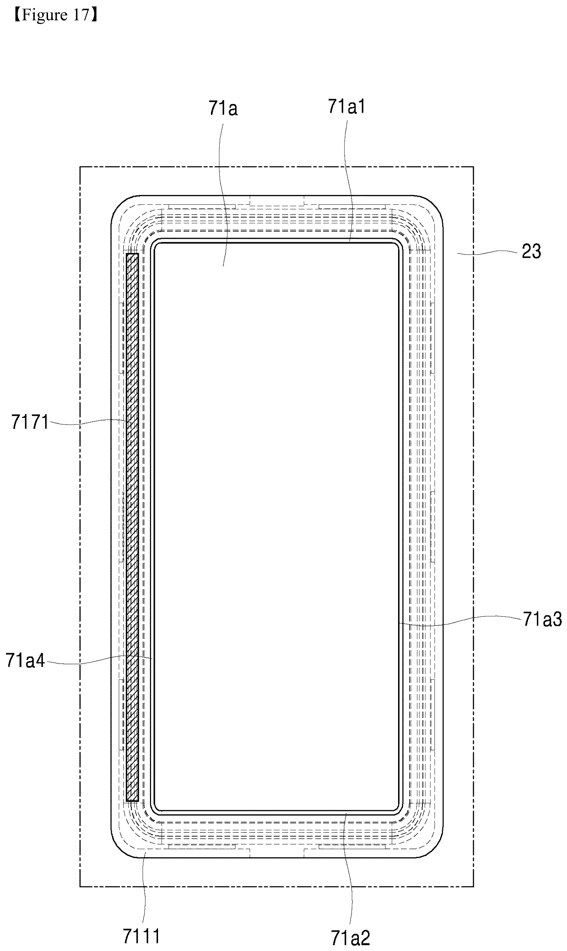

Hereinafter, the arrangement structure of the light source part 717, which constitutes the lighting device 71 according to the first embodiment of the present invention, will be described with reference to FIGS. 16 and 17.

First, FIG. 16 illustrates a configuration in which the circuit board 7171 and the light source element 7172, which constitute the light source part 717, are arranged in parallel with the lower end edge of the light guide plate 716 and the lower end of the light-emitting surface 71a so that the light source element 7172 may emit visible rays toward the lower end edge of the light guide plate 716.

Because the light source part 717 is arranged in parallel with the lower end edge of the light guide plate 716 and the lower end of the light-emitting surface 71a as described above, a predetermined gradation, in which the brightness gradually changes in the leftward/rightward direction, or a movement motion of a predetermined shadow may be formed on the light-emitting surface 71a.

The gradation or the movement motion of the shadow formed on the light-emitting surface 71a in the leftward/rightward direction as described above may be implemented by a process of differently adjusting the light amounts outputted from the light source elements 7172 arranged on the circuit board 7171 in the longitudinal direction of the circuit board 7171, a process of turning on some of the light source elements 7172 and turning off some of the light source elements 7172, or a process of differently outputting the amounts of the light source elements 7172 sequentially or turning off the light source elements 7172 sequentially.

However, this is provided for illustrative purposes only. In order to form the gradation or the movement motion of the shadow in the leftward/rightward direction, the light source parts 717 may be arranged along the upper end edge of the light guide plate 716 in parallel with the upper end edge of the light guide plate 716, or the light source parts 717 may be disposed along both the upper and lower end edges of the light guide plate 716. This is considered as naturally falling within the scope of the present invention.

Meanwhile, as illustrated in FIG. 17, the circuit board 7171 and the light source element 7172, which constitute the light source part 717, may be disposed in parallel with the left and right edges of the light guide plate 716 and the left and right ends of the light-emitting surface 71a so that the light source element 7172 may emit visible rays toward the left or right edge of the light guide plate 716.

Because the light source part 717 is arranged in parallel with the left and right edges of the light guide plate 716 and the left and right ends of the light-emitting surface 71a as described above, such that the gradation or the movement motion of the shadow may be formed on the light-emitting surface 71a in the upward/downward direction.

As in the above-mentioned description, the gradation or the movement motion of the shadow formed on the light-emitting surface 71a in the upward/downward direction as described above may be implemented by a process of differently adjusting the light amounts outputted from the light source elements 7172 arranged on the circuit board 7171 in the longitudinal direction of the circuit board 7171, a process of turning on some of the light source elements 7172 and turning off some of the light source elements 7172, or a process of differently outputting the amounts of the light source elements 7172 sequentially or turning off the light source elements 7172 sequentially.

### [Detailed Configuration of Lighting Device according to Second Embodiment]

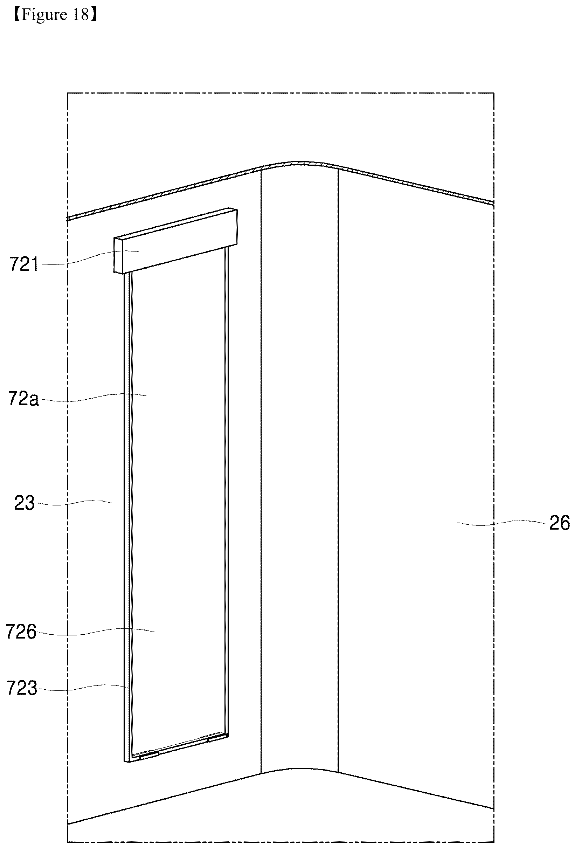

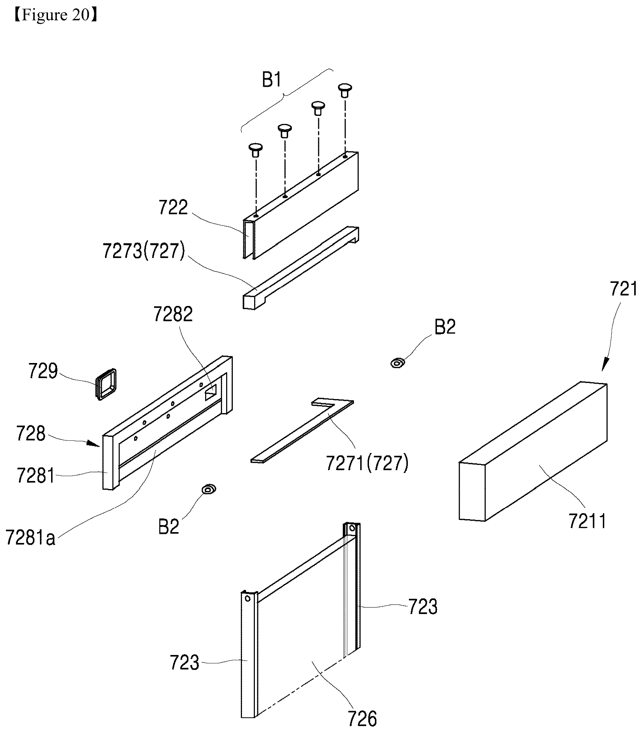

Hereinafter, a lighting device 72 according to a second embodiment of the present invention will be described with reference to FIGS. 18 to 21.

First, with reference to FIG. 18, unlike the above-mentioned first embodiment, the lighting device 72 according to the second embodiment of the present invention may be disposed to be fixed to the rear surface 23 of the tub 20 and disposed in the tub 20 as a whole.

That is, unlike the above-mentioned first embodiment, the lighting device 72 according to the second embodiment may be disposed in the tub 20 to a light source part 727 corresponding to an electrical component.

Therefore, as described below, the rear surface 23 of the tub 20 may have only the opening portion 232 having the open area formed to the extent that an extension tube 7282 may pass, and the extension tube 7282 may be configured to extend a terminal part 7271b of the light source part 727 to the outside of the tub 20 so that electric power may be supplied to the light source part 727. Therefore, in comparison with the first embodiment, it is possible to remarkably decrease the open area of the opening portion 232 and remarkably reduce a likelihood of a deterioration in rigidity of the tub 20 and a likelihood of the occurrence of a leak of water through the opening portion 232.

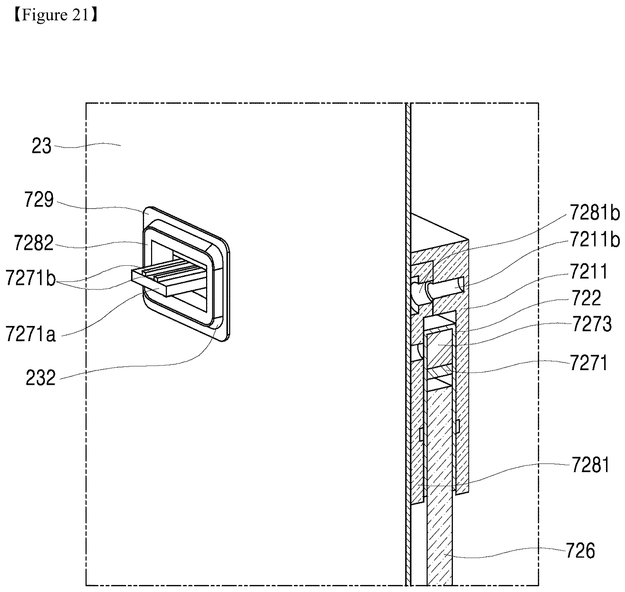

FIGS. 19 and 21 illustrate a detailed configuration of the lighting device 72 according to the second embodiment.

With reference to FIGS. 19 to 21, the lighting device 72 according to the second embodiment of the present invention may include the light source part 727 configured to generate visible rays, a diffusion plate 726 configured to switch a movement path of the visible rays generated by the light source part 727 toward the inside of the tub 20 and configured to define a light-emitting surface 72a, an upper bracket 722 configured to support and protect the light source part 727, a lower bracket 723 coupled to an outer periphery edge of the diffusion plate 726 and configured to support and protect the diffusion plate 726, and covers 721 and 728 configured to accommodate the light source part 727 therein and coupled to an upper end of the diffusion plate 726.

Similar to the first embodiment, the light source part 727, which generates visible rays by receiving external electric power, may be arranged at an upper side of an upper end edge of the diffusion plate 726 along the upper end edge of the diffusion plate 726 in order to emit visible rays through one side edge of the diffusion plate 726, more specifically, the upper end edge of the diffusion plate 726.

That is, the light source part 727 of the lighting device 72 according to the second embodiment is configured to be accommodated in the tub 20 as a whole.

Therefore, the light source part 727 may be disposed at the upper side of the diffusion plate 726 that is the position at which a likelihood of an effect of the washing water on the light source part 727 may be relatively minimized.

The light source part 727 of the lighting device 72 according to the second embodiment may include at least one light source element 7272, a circuit board 7271 on which at least one light source element 7272 is mounted, and a board holder 7273 configured to accommodate the circuit board 7271.

However, a leakproof means may be added to the light source part 727 in consideration of the configuration in which the light source part 727 is disposed in the tub 20 as a whole.

As the leakproof means for the light source part 727, the lighting device 72 according to the second embodiment may further include the upper bracket 722 accommodated in the light source part 727 as a whole.

As illustrated in FIGS. 19 and 21, the upper bracket 722 may be provided in the form of a hollow box having a ' 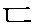 '-shaped cross-section.

The light source part 727 may pass through an opened lower side of the upper bracket 722 and be mounted in the upper bracket 722. A plurality of bolt holes may be provided in an upper surface of the upper bracket 722.

The board holder 7273 and the upper bracket 722 of the light source part 727 may be fastened to each other by means of a plurality of first fastening bolts B1 passing through the plurality of bolt holes.

Meanwhile, because the light source part 727 of the lighting device 72 according to the second embodiment is disposed in the tub 20 as a whole, the light guide plate configured to switch the movement path of visible rays may be excluded, unlike the first embodiment.

Therefore, the visible rays generated by the light source part 727 may be introduced into the diffusion plate 726 through the upper end edge of the diffusion plate 726, pass through the light-emitting surface 72a formed on the front surface of the diffusion plate 726, and then propagate into the tub 20.

Because the component corresponding to the light guide plate may be excluded as described above, the size of the lighting device 72 in the forward/rearward direction according to the second embodiment may be decreased, in comparison with the first embodiment.

The lower bracket 723 may be coupled to the left and right edges and the lower end of the diffusion plate 726. The diffusion plate 726 may be exposed to the inside of the tub 20 as a whole. Therefore, the lower bracket 723 may be a means for reinforcing and protecting the diffusion plate 726 and coupled to the left and right edges and the lower end edge of the diffusion plate 726.

The lower bracket 723 is disposed to cover a part of the front surface of the diffusion plate 726 that transmits visible rays. Therefore, the size and area of the light-emitting surface 72a of the diffusion plate 726 may be defined by the lower bracket 723.

A bolt hole, through which a second fastening bolt B2 may pass, may be formed at the upper end of the lower bracket 723 extending in the upward direction beyond the upper end edge of the diffusion plate 726.

The upper end of the lower bracket 723 may be fastened to the board holder 7273 by means of the second fastening bolt B2.

The covers 721 and 728 are disposed above the diffusion plate 726 and serve to accommodate the light source part 727 and the upper end portion of the diffusion plate therein and protect the light source part 727 and the upper end portion of the diffusion plate.

In consideration of convenience of assembling, the covers 721 and 728 may be provided as separate bodies separated in the forward/rearward direction, the separate body disposed at the front side may be defined as the front cover 721, and the separate body disposed at the rear side may be defined as the rear cover 728.

An accommodation space, in which the light source part 727, the upper bracket 722, and the upper end of the diffusion plate 726 may be accommodated, may be formed between the front cover 721 and the rear cover 728.

A bolt hole 7211b and a bolt groove 7281b, through which a fastening bolt (not illustrated) for fastening the front cover 721 and the rear cover 728 may pass, may be formed above the accommodation space.

Meanwhile, as illustrated in FIG. 19, as a means for coupling the upper bracket 722 disposed therein and a means for preventing an introduction of washing water, sealing members 724 may be disposed on an inner surface of the front cover 721 and an inner surface of the rear cover 728.

Similar to a first sealing member 724 and a second sealing member 724 in the first embodiment, the sealing member 724 of the lighting device 72 according to the second embodiment may have predetermined elasticity and include a bonding agent component so as to serve as a coupling means and a sealing means.

As a means for guiding the position of the sealing member 724 and expanding the bonding area, groove portions 7211a and 7281a may be concavely formed in the inner surface of the front cover 721 and the inner surface of the rear cover 728.

Meanwhile, as described above, the lighting device 72 according to the second embodiment may be configured to be disposed in the tub 20 as a whole. An outer end 7271a and the terminal part 7271b of the circuit board 7271, which constitute the light source part 727, may pass through the rear surface 23 of the tub 20 and extend to the outside of the tub 20 so that electric power may be supplied to the light source part 727.

As described above, as a means for protecting and guiding the outer end 7271a and the terminal part 7271b of the circuit board 7271 extending to the outside of the tub 20, the extension tube 7282 may be integrated with the rear cover 728.

For example, as illustrated in FIG. 21, the extension tube 7282 may be provided in the form of a pipe having a quadrangular cross-section.

One end of the extension tube 7282 may be integrally connected to the rear surface of the rear cover 728, and a passageway formed in the extension tube 7282 may communicate with internal spaces of the covers 721 and 728.

The other end of the extension tube 7282 may extend to the outside of the tub 20 while passing through the opening portion 232 formed in the rear surface 23 of the tub 20.

The circuit board 7271 of the light source part 727 may extend through the passageway in the extension tube 7282, and the outer end 7271a and the terminal part 7271b of the circuit board 7271 may pass through the other end of the extension tube 7282 and be exposed to the outside of the extension tube 7282.

As described above, in the lighting device 72 according to the second embodiment, only the other end of the extension tube 7282 and the outer end 7271a of the circuit board 7271 may be disposed outside the tub 20, and the remaining parts, which exclude the above-mentioned parts, may be disposed inside the tub 20.

Meanwhile, as a means for preventing a leak of water between the opening portion 232 and the extension tube 7282 of the tub 20, a gasket 729 may be further provided on an outer surface of the extension tube 7282 and made of a predetermined elastomer.

### [Detailed Configuration of Lighting Device according to Third Embodiment]

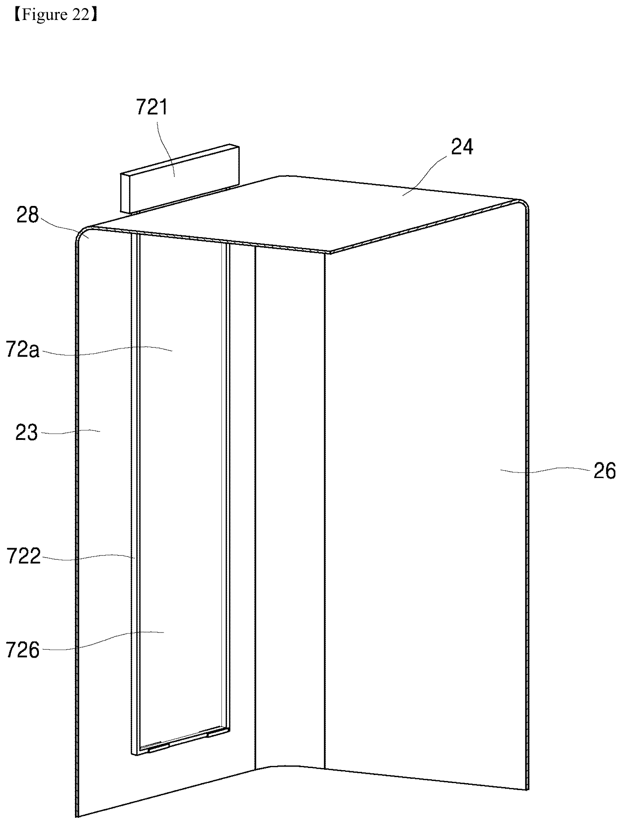

Hereinafter, a lighting device 72 according to a third embodiment of the present invention will be described with reference to FIGS. 22 to 24.

First, with reference to FIG. 22, similar to the above-mentioned second embodiment, the lighting device 72 according to the third embodiment of the present invention is disposed to be fixed to the rear surface 23 of the tub 20.

However, unlike the second embodiment, only the lower bracket 723 and the diffusion plate 726, which defines the light-emitting surface 72a, may be disposed in the tub 20, and the other components of the lighting device 72 may be disposed outside the tub 20.

That is, the lighting device 72 according to the third embodiment of the present invention is almost similar in basic configuration to the above-mentioned second embodiment. However, unlike the above-mentioned second embodiment, the light source part 727, which corresponds to an electrical component, and components disposed around the light source part 727 may be disposed outside the tub 20.

Therefore, hereinafter, only the parts distinguished from the parts in the second embodiment will be described, and a description of the parts identical to or duplicative of the parts of the second embodiment will be omitted.

As illustrated in FIG. 23, the components, such as the light source part 727, which corresponds to the electrical component, and the covers 721 and 728 and the upper bracket 722, which serve to accommodate and protect the light source part 727, are disposed outside the tub 20, which may minimize a likelihood that the light source part 727 is damaged by the washing water.

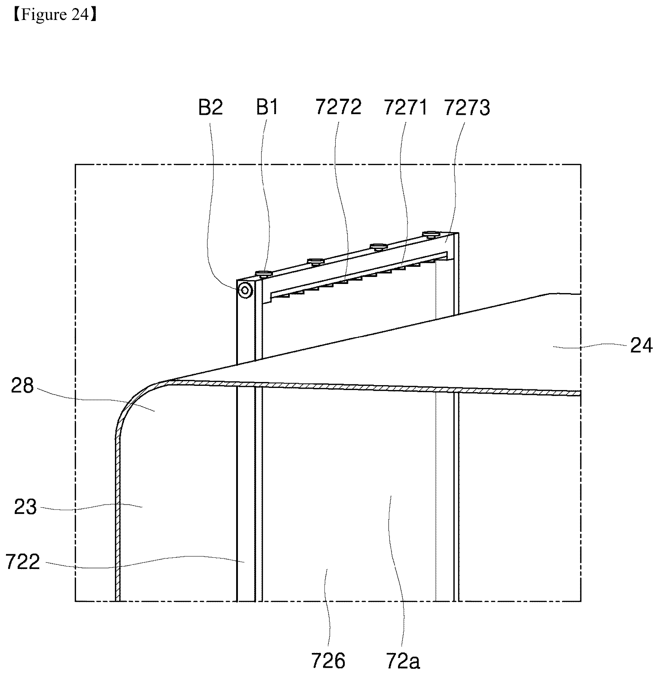

FIGS. 23 and 24 illustrate a detailed configuration of the lighting device 72 according to the third embodiment.

Similar to the above-mentioned second embodiment, the lighting device 72 according to the third embodiment may define an assembly by being assembled in advance before being disposed and fixed in the tub 20.

However, the lighting device 72 of the second embodiment may be configured to be moved into the tub 20 as a whole through the front surface of the tub 20 and then fixed to the rear surface 23 of the tub 20. However, in the case of the third embodiment, the lighting device 72 may be coupled and fixed to the tub 20 by simply passing through and being inserted into the opening portion 232 provided in the tub 20.

More specifically, an edge surface 28, which is configured as a curved surface having a predetermined curvature, is provided between the upper surface 24 and the rear surface 23 of the tub 20.

As described above, the opening portion 232 formed in a slot shape may be provided in the edge surface 28 that connects the upper surface 24 and the rear surface 23 of the tub 20.

The opening portion 232 having a slot shape may have an open area formed to the extent that the lower end of the lighting device 72, which includes the diffusion plate 726 and the lower bracket 723, may pass through the open area.

That is, the width in the forward/rearward direction and the width in the leftward/rightward direction of the opening portion 232 may be larger than the width in the forward/rearward direction and the width in the leftward/rightward direction of the lower end of the lighting device 72 including the diffusion plate 726 and the lower bracket 723.

In addition, the width in the forward/rearward direction and the width in the leftward/rightward direction of the opening portion 232 may be smaller than the width in the forward/rearward direction and the width in the leftward/rightward direction of the covers 721 and 728.

Therefore, in the lighting device 72 according to the third embodiment of the present invention, the lower end including the diffusion plate 726 and the lower bracket 723 may enter the opening portion 232 first and be coupled to the tub 20 by being simply moved in parallel with the downward direction.

When the above-mentioned coupling process by means of the parallel movement of the lighting device 72 is completed, the diffusion plate 726 and the lower bracket 723 may pass through the opening portion 232 of the tub 20 in the upward/downward direction and be disposed in the tub 20 in the state in which the diffusion plate 726 and the lower bracket 723 extend from the outside of the tub 20 toward the inside of the tub 20.

In this case, because the covers 721 and 728 cannot pass through the opening portion 232 because of the width in the forward/rearward direction and the width in the leftward/rightward direction of the opening portion 232 of the tub 20, the covers 721 and 728 may be mounted at the upper side of the edge surface 28 of the tub 20 in the state in which the light source part 727 is accommodated in the covers 721 and 728.

Although not illustrated, a means for supporting and fixing the diffusion plate 726 and the lower bracket 723 retracted inward through the opening portion 232 may be provided on the inner surface 20in of the rear surface 23 of the tub 20.

In addition, a sealing means, which is similar to the gasket 729 of the second embodiment, may be provided in the opening portion 232 of the tub 20 in order to prevent the occurrence of a leak of washing water between the opening portion 232 and the diffusion plate 726 of the tub 20.

While the present invention has been described above with reference to the accompanying drawings, the present invention is not limited to the drawings and the embodiments disclosed in the present specification, and it is apparent that the present invention may be variously changed by those skilled in the art without departing from the technical spirit of the present invention. Further, even though the operational effects of the configurations of the present invention have not been explicitly disclosed and described in the description of the embodiment of the present invention, the effects, which can be expected by the corresponding configurations, should, of course, be acceptable.

## Claims

1. A dishwasher comprising:
a tub configured to define a washing space configured to accommodate dishes and having an opened front side; and
a lighting device installed on an inner surface of the tub and having a light-emitting surface configured to emit visible rays toward the washing space,
wherein an opening portion is provided in an inner surface of the tub and configured to allow the inside and outside of the tub to communicate with each other, and
wherein the lighting device is disposed in the tub over the inside and outside of the tub while passing through the opening portion.

2. The dishwasher of claim 1, wherein the lighting device comprises:
a light source part configured to generate the visible rays;
a light guide plate configured to switch a movement path of the visible rays generated by the light source part;
a diffusion plate configured to define the light-emitting surface and diffuse the visible rays, which are introduced while passing through the light guide plate, toward the light-emitting surface; and
a front cover coupled to an outer periphery edge of the light guide plate and fixed to the tub,
wherein the front cover is attached to the inner surface of the tub, and
wherein the opening portion is closed by the front cover and the diffusion plate.

3. The dishwasher of claim 2, wherein the lighting device further comprises:
a first sealing member configured to attach the front cover to the inner surface of the tub and prevent the occurrence of a leak of water between the front cover and the tub; and
a second sealing member configured to attach the diffusion plate to the front cover and prevent the occurrence of a leak of water between the front cover and the diffusion plate.

4. The dishwasher of claim 3, wherein a protruding surface is disposed around the opening portion of the tub and formed convexly toward the washing space,
wherein a first groove portion is provided in one side surface of the front cover disposed to face the inner surface of the tub, and the first groove portion is formed at a position corresponding to the protruding surface and formed concavely toward the washing space so that the protruding surface is inserted into the first groove portion, and
wherein the first sealing member is disposed between the protruding surface and the first groove portion.

5. The dishwasher of claim 4, wherein a plurality of through-holes, through which the first sealing member passes, is provided in the protruding surface, and the plurality of through-holes is disposed at equal intervals along the protruding surface.

6. The dishwasher of claim 2, wherein the lighting device further comprises a mid-casing disposed outside the tub and configured to accommodate and support the light source part and the light guide plate,
wherein the tub comprises a rear bracket provided on an outer surface of the inner surface, disposed around the opening portion, and configured to fix the mid-casing to the tub, and
wherein the mid-casing is detachably fixed to the tub in a non-adhesive manner by the rear bracket.

7. The dishwasher of claim 6, wherein the rear bracket comprises:
a bracket main body extending along a periphery of the opening portion and fixed to the outer surface of the inner surface; and
a plurality of fixing portions each having one end that is a fixed end integrally connected to the bracket main body, and the other end that is a free end extending toward the opening portion, the plurality of fixing portions being configured to elastically support an outer periphery edge of the mid-casing.

8. The dishwasher of claim 7, wherein the plurality of fixing portions comprises a pair of first fixing portions disposed at positions spaced apart from each other in an upward/downward direction with the mid-casing interposed therebetween,
wherein an interval in the upward/downward direction between the pair of first fixing portions varies toward the bracket main body,
wherein a minimum interval in the upward/downward direction between the pair of first fixing portions is smaller than a width in the upward/downward direction of the mid-casing, and
wherein a maximum interval in the upward/downward direction between the pair of first fixing portions is larger than the width in the upward/downward direction of the mid-casing.

9. The dishwasher of claim 7, wherein the plurality of fixing portions comprises a pair of second fixing portions disposed at positions spaced apart from each other in a leftward/rightward direction with the mid-casing interposed therebetween,
wherein an interval in the leftward/rightward direction between the pair of second fixing portions varies toward the bracket main body,
wherein a minimum interval in the leftward/rightward direction between the pair of second fixing portions is smaller than a width in the leftward/rightward direction of the mid-casing, and
wherein a maximum interval in the leftward/rightward direction between the pair of second fixing portions is larger than the width in the leftward/rightward direction of the mid-casing.

10. The dishwasher of claim 6, wherein the mid-casing is fixed to an outer portion of the tub after the front cover is fixed to an inner portion of the tub in a state in which the light guide plate is attached to the front cover, and
wherein the front cover and the mid-casing are fixed to the tub in a non-fastened state.

11. The dishwasher of claim 2, wherein the light source part extends in a leftward/rightward direction in parallel with an upper or lower end of the light-emitting surface.

12. The dishwasher of claim 2, wherein the light source part extends in an upward/downward direction in parallel with a left or right end of the light-emitting surface.

13. The dishwasher of claim 1, wherein the lighting device is fixed to a rear surface of the inner surface of the tub disposed to face the opened front side.

14. The dishwasher of claim 13, further comprising:
a plurality of guide rails disposed on two opposite side walls of the inner surface of the tub and configured to guide a movement of an accommodation part configured to accommodate the dishes,
wherein a lower end of the light-emitting surface is positioned between a lower rail, which is disposed at a lowermost side among the plurality of guide rails, and an upper rail disposed at a position higher than the lower rail based on an upward/downward direction.

15. The dishwasher of claim 13, wherein an upper end of the light-emitting surface is positioned between an upper rail and a top rail disposed at an uppermost side among the plurality of guide rails based on an upward/downward direction.

16. The dishwasher of claim 1, wherein the lighting device comprises:
a light source part configured to generate the visible rays;
a diffusion plate configured to define the light-emitting surface and diffuse the visible rays, which are generated by the light source part, toward the light-emitting surface; and
a cover disposed above the diffusion plate and configured to accommodate the light source part and an upper end of the diffusion plate therein,
wherein an extension tube is provided on one side surface of the cover, protrudes toward the inner surface of the tub, and extends to the outside of the tub while passing through the opening portion, and
wherein the cover is disposed in the tub as a whole, except for the extension tube.

17. The dishwasher of claim 16, wherein one end of the light source part passes through the cover and extends to the outside of the tub along the inside of the extension tube.

18. The dishwasher of claim 16, wherein the lighting device further comprises a gasket disposed between the opening portion and the extension tube to prevent the occurrence of a leak of water between the opening portion and the extension tube.

19. The dishwasher of claim 1, wherein the lighting device comprises:
a light source part configured to generate the visible rays;
a diffusion plate configured to define the light-emitting surface and diffuse the visible rays, which are generated by the light source part, toward the washing space; and
a cover disposed above the diffusion plate and configured to accommodate the light source part and an upper end of the diffusion plate therein,
wherein the light source part and the cover are disposed outside the tub, and
wherein the diffusion plate passes through the opening portion and extends toward the inside of the tub from the outside of the tub.

20. The dishwasher of claim 19, wherein the opening portion is formed in an edge surface having a predetermined curvature and configured to connect an upper surface of the tub and a rear surface of the tub.
